# EUROPÄISCHE PATENTSCHRIFT

(11) **EP 4 400 769 B1**
(45) Veröffentlichungstag und Bekanntmachung des Hinweises auf die Patenterteilung: **01.04.2026**
(21) Anmeldenummer: 24151897.6
(22) Anmeldetag: 15.01.2024
(51) Int. Cl.: F24C 14/00

(54) **KÜCHEN- UND/ODER GASTRONOMIEGERÄT**
KITCHEN AND/OR GASTRONOMY DEVICE
APPAREIL DE CUISINE ET/OU DE GASTRONOMIE

(30) Priorität: 16.01.2023 DE 102023100845
(43) Veröffentlichungstag der Anmeldung: 17.07.2024
(60) Teilanmeldung: 26160036.5
(73) Patentinhaber: WELBILT Deutschland GmbH, 82436 Eglfing (DE)
(72) Erfinder: FISCHHABER, Herbert, 82380 Peißenberg (DE); LAMMERSKITTEN, Rainer, 82436 Eglfing (DE); MANTER, Arndt, 88263 Horgenzell (DE); SIEBERT, Sebastian, 83115 Neubeuern (DE); SMITS, Stan, 82362 Weilheim (DE); WILD, Hannes, 82418 Riegsee (DE); WURDINGER, Günter, 82380 Peißenberg (DE)
(74) Vertreter: Hoefer & Partner Patentanwälte mbB

(56) Entgegenhaltungen:
- EP-A2- 1 209 419
- EP-B1- 1 364 166
- WO-A2-2015/165733
- DE-A1- 102014 202 430
- DE-A1- 102015 107 488
- DE-A1- 102015 107 597
- DE-A1- 102015 109 019
- DE-A1- 102020 117 841
- DE-A1- 102020 117 842

## Beschreibung

Die Erfindung betrifft ein Küchen- und/oder Gastronomiegerät, insbesondere ein Gargerät.

DE 10 2015 109 019 A1 betrifft eine Reinigungsvorrichtung für gewerbliche Gargeräte. Die Reinigungsvorrichtung weist eine Anschlusseinheit, insbesondere einen Aufnahmestutzen, zur Aufnahme eines Behälters mit einem Feststoff-Reinigungsmittel, eine Verflüssigungseinrichtung zur Verflüssigung des Feststoff-Reinigungsmittels, gegebenenfalls unter Einsatz eines Lösungsmittels, und optional zumindest einen ersten Vorratstank auf.

DE 10 2014 202 430 A1 bezieht sich auf ein Dosiergerät zur Bereitstellung mindestens eines Reinigers oder mindestens einer Reinigungskomponente und auf ein Verfahren zum Betreiben eines Dosiergerätes. Dieses umfasst eine Vorlagekammer und ein in dieser mittels einer Umwälzpumpe umgewälztes Umwälzmedium. Die Umwälzpumpe fördert das Umwälzmedium im Kreislauf. Das Umwälzmedium wird über Düsen zeitlich definiert auf den mindestens einen Reiniger oder die mindestens eine Reinigerkomponente aufgebracht.

DE 10 2020 117 841 A1 zeigt eine Reinigungschemiebaugruppe für ein Gargerät. Die Reinigungschemiebaugruppe hat einen Sammelbehälter, eine Pumpe, mindestens zwei Anschlüsse für Vorratsbehälter, die unterschiedliche Reinigungschemikalien enthalten, und mindestens einem Mittel zum Erkennen der Reinigungschemikalie im jeweiligen Vorratsbehälter.

DE 10 2015 107 597 A1 betrifft ein Reinigungsverfahren für ein Gargerät mit zumindest einem Reservoir für ein flüssiges Reinigungsmittel, das zumindest einem zu reinigenden Innenraum des Gargeräts zugeführt und nach einer Reinigung aus dem Innenraum abgeführt werden kann, wobei zumindest ein fester Reinigungschemie-Körper in eine Reinigungsmittelzufuhreinrichtung eingebracht wird, und in der Reinigungsmittelzufuhreinrichtung durch Hinzugabe von Lösungsmittel ein vorgegebener Anteil des Reinigungschemie-Körper verflüssigt wird.

DE 10 2020 117842 A1 zeigt eine Reinigungschemiebaugruppe für ein Gargerät, die Reinigungschemiebaugruppe hat einen Sammelbehälter, eine Pumpe, mindestens zwei Anschlüsse für zwei Vorratsbehälter, die unterschiedliche Reinigungschemikalien enthalten, einen Wassereingang, mit dem der Reinigungschemiebaugruppe Wasser zugeführt werden kann, einen ersten Ausspülkreis, mit dem die Pumpe Flüssigkeit aus dem Sammelbehälter in einen der beiden Vorratsbehälter leiten kann, um aus diesem eine erste Reinigungslösung auszuspülen, und einen zweiten Ausspülkreis, mit dem die Pumpe Flüssigkeit aus dem Sammelbehälter in den anderen der beiden Vorratsbehälter leiten kann, um aus diesem eine zweite Reinigungslösung auszuspülen, und einem Ablaufanschluss, mit dem Flüssigkeit zum Gargerät gepumpt werden kann.

WO 2015/165733 A2 zeigt ein Dosiersystem zur dosierten Abgabe von in Gebinden gelagerten chemischen Substanzen an eine Geschirrspülmaschine oder Waschmaschine umfassend zumindest ein mit dem Gebinde verbindbares Spendergerät, eine Logik zur Steuerung des Betriebs des zumindest einen Spendergeräts und der Geschirrspülmaschine oder Waschmaschine, sowie ein Benutzer-Interface mit einem Display und Tasten zur Bedienung der Logik.

DE 10 2015 107488 A1 betrifft ein Reinigungsverfahren für ein Gargerät mit zumindest einem Reservoir für ein flüssiges Reinigungsmittel, das zumindest einem zu reinigenden Innenraum des Gargeräts zugeführt und nach einer Reinigung aus dem Innenraum abgeführt werden kann, mit folgenden Schritten: Einfüllen eines Feststoff-Reinigers und eines Lösungsmittels in ein Reservoir, Beaufschlagen des Inhalts in dem Reservoir mit kinetischer Energie zum Erzeugen eines flüssigen Reinigungsmittels homogener, vorgegebener Konzentration, und Fördern des flüssigen Reinigungsmittels aus dem Reservoir in den Innenraum.

Es ist Aufgabe vorliegender Erfindung, ein Küchen- und/oder Gastronomiegerät anzugeben, das bei einfacher Herstellung und wartungsarmem Betrieb bedienerfreundlich und zuverlässig gereinigt werden kann.

Die Lösung der Aufgabe erfolgt durch die Merkmale des unabhängigen Anspruchs. Die abhängigen Ansprüche haben bevorzugte Ausgestaltung der Erfindung zum Gegenstand.

Die Erfindung zeigt ein Küchen und/oder Gastronomiegerät. Das Gerät ist insbesondere für den gewerblichen Einsatz in der Gastronomie oder für den häuslichen Gebrauch in einer Küche ausgebildet. Bei dem Gerät handelt es sich vorzugsweise um ein Gargerät. Beispielsweise ist das Gerät als Kombi-Dämpfer ausgebildet. Alternativ kann das Gerät beispielsweise als Warmhalteofen oder Backofen ausgestaltet sein.

Das Küchen- und/oder Gastronomiegerät umfasst einen Lebensmittelraum zur Behandlung und/oder Aufbewahrung von Lebensmitteln. Besonders bevorzugt umfasst das Gerät ein Gehäuse, wobei innerhalb des Gehäuses der Lebensmittelraum angeordnet ist. Sofern das Gerät als Gargerät ausgebildet ist, kann der Lebensmittelraum auch als Garraum bezeichnet werden. In oder an dem Lebensmittelraum befindet sich vorzugsweise eine Heiz-/ Umlufteinheit, die es ermöglicht, den Lebensmittelraum zu Heizen und/oder mit Umluft zu beaufschlagen. Insbesondere kann mittels der Heiz-/Umlufteinheit auch Dampf erzeugt werden, um mittels des Dampfes die Lebensmittel im Lebensmittelraum zu behandeln.

Des Weiteren umfasst das Küchen- und/oder Gastronomiegerät einen Sammelbehälter zur Bevorratung einer flüssigen Waschflotte. Der Sammelbehälter befindet sich vorzugsweise unterhalb des Lebensmittelraums. Besonders bevorzugt ist eine Rückführung vorgesehen, die es ermöglicht, die Waschflotte aus dem Lebensmittelraum zurück in den Behälter zu führen. Die Rückführung kann als Ablaufkanal ausgestaltet sein, der vom Lebensmittelraum in den Sammelbehälter führt.

Der Sammelbehälter ist über eine Waschflotten-Leitung mit dem Lebensmittelraum verbunden. Diese Waschflotten-Leitung ist zum Leiten der Waschflotte aus dem Sammelbehälter in den Lebensmittelraum ausgebildet und angeordnet. Besonders bevorzugt ist eine Waschflotten-Pumpe vorgesehen, die die Waschflotte durch die Waschflotten-Leitung bis in den Lebensmittelraum fördert. Insbesondere ist das Küchen- und/oder Gastronomiegerät dazu ausgebildet, die Waschflotte im Lebensmittelraum an die Wände des Lebensmittelraums zu verteilen, um so den Lebensmittelraum zu reinigen. Am Boden des Lebensmittelraums fließt die Waschflotte zusammen und kann über die beschriebene Rückführung wieder in den Sammelbehälter geführt werden.

Zum Herstellen der Waschflotte wird Frischwasser mit einem Zusatzstoff angereichert. Bei diesem Zusatzstoff kann es sich beispielsweise um einen Reiniger oder um einen Entkalker oder Klarspüler handeln. Im Rahmen vorliegender Erfindung ist vorgesehen, dass der Zusatzstoff bei Raumtemperatur nicht flüssig, sondern fest ist und sich in einem Behälter befindet. Unter "festem" Zusatzstoff wird vorzugsweise auch "gelförmiger" Zusatzstoff verstanden. In dem Behälter ist Zusatzstoff für mehrere Reinigungsvorgänge bevorratet, so dass immer nur ein Teil des Zusatzstoffes aus dem Behälter abgelöst werden muss.

Das Küchen- und/oder Gastronomiegerät umfasst zumindest eine Feststoff-Einheit. Die einzelne Feststoff-Einheit umfasst mindestens eine Aufnahme zum Einsetzen des beschriebenen Behälters, der mit festem Zusatzstoff gefüllt ist. Des Weiteren umfasst die Feststoff-Einheit eine Zuleitung, die zur Aufnahme führt. Die Zuleitung ist zum Zuführen eines Fluids ausgebildet, das den Zusatzstoff ablöst.

Ferner umfasst die einzelne Feststoff-Einheit eine Ableitung, die von der Aufnahme in Richtung Sammelbehälter führt. Die Ableitung ist zum Abführen des Fluids samt abgelöstem Zusatzstoff ausgebildet. Vorzugsweise führt die Ableitung bis in den Sammelbehälter; allerdings kann die Ableitung auch in eine andere Leitung münden, die dann wiederum bis zum Sammelbehälter führt.

Grundsätzlich weist das Küchen- und/oder Gastronomiegerät zumindest eine dieser beschriebenen Feststoff-Einheit auf. Dadurch kann die Waschflotte mit zumindest einem Zusatzstoff, beispielsweise Reiniger, angereichert werden. Besonders bevorzugt ist jedoch vorgesehen, dass das Reinigen des Lebensmittelraums nacheinander mit zwei unterschiedlichen Waschflotten erfolgt. Insbesondere wird zunächst eine Waschflotte mit dem Zusatzstoff "Reiniger" erzeugt und durch den Lebensmittelraum geleitet (insbesondere zirkuliert) und daraufhin wird eine neue Waschflotte mit dem Zusatzstoff "Entkalker" oder "Klarspüler" erzeugt und durch den Lebensmittelraum geleitet (insbesondere zirkuliert). Deshalb weist das Küchen- und/oder Gastronomiegerät vorzugsweise zumindest zwei der Feststoff-Einheiten auf. Dadurch sind auch zwei Aufnahmen vorgesehen, in die jeweils ein Behälter eingesetzt werden kann, so dass ein Behälter mit Reiniger und ein Behälter mit Entkalker oder Klarspüler einsetzbar sind.

Die erste Aufnahme weist vorzugsweise eine andere Innengeometrie auf als die zweite Aufnahme. Dadurch kann erreicht werden - bei entsprechender Ausgestaltung der Außenkontur unterschiedlicher Behälter -, dass nur der passende Behälter in die jeweilige Aufnahme einsteckbar ist. So wird beispielsweise vermieden, dass in die Aufnahme für den Reiniger der Behälter mit dem Entkalker/Klarspüler eingesteckt wird.

Die Aufnahme, insbesondere die erste Aufnahme und/oder die zweite Aufnahme, ist/sind insbesondere zum Einstecken und nicht zum Einschrauben, des jeweiligen Behälters ausgebildet. In einer alternativen Ausführungsform kann der Behälter aber auch mittels Gewinde oder Bajonettverschluss eingeschraubt werden.

Das Küchen- und/oder Gastronomiegerät umfasst zumindest eine Zuleitungs-Pumpe zum Pumpen des Fluids durch die zumindest eine Zuleitung. Wie noch im Detail beschrieben wird, können bei Verwendung von zwei Feststoff-Einheiten zwei einzelne Zuleitungs-Pumpen oder eine gemeinsame Zuleitungs-Pumpe zur Anwendung kommen. Mittels der zumindest einen Zuleitungs-Pumpe wird ein Fluid durch die Zuleitung bis zur Aufnahme gefördert. Hierbei handelt es sich vorzugsweise um die Waschflotte aus dem Sammelbehälter. Zusätzlich oder alternativ ist auch vorgesehen, dass mittels der Zuleitungs-Pumpe Frischwasser zu der Aufnahme der Feststoff-Einheit gepumpt wird.

Die "Waschflotte" im Sammelbehälter kann zu Beginn des Reinigungsvorgangs aus Frischwasser bestehen, wird aber als Waschflotte bezeichnet, da sie sich im Sammelbehälter befindet. Dieses Fluid aus dem Sammelbehälter und/oder zusätzliches Frischwasser wird solange durch die jeweilige Feststoff-Einheit gepumpt, bis die nötige, oder festgelegte Menge an Zusatzstoff aus dem Behälter abgelöst ist. Daraufhin oder währenddessen kann die Waschflotte über die Waschflotten-Leitung durch den Lebensmittelraum zirkulieren, um diesen zu reinigen. Zum Ende des Vorgangs wird die Waschflotte aus dem Sammelbehälter in Richtung einer Abwasserleitung abgelassen oder gepumpt. Im nächsten Schritt kann dann die Waschflotte mit dem zweiten Zusatzstoff (z.B. Entkalker/Klarspüler) erzeugt und durch den Lebensmittelraum zirkuliert werden, oder der Reinigungsvorgang des Lebensmittelraums wird durch die Zirkulation von reinem Frischwasser beendet.

Wie bereits erläutert, umfasst das Küchen- und/oder Gastronomiegerät vorzugsweise zumindest zwei, besonders vorzugsweise genau zwei, der Feststoff-Einheiten. Soweit im Rahmen vorliegenden Dokumentes lediglich von der Feststoff-Einheit, der Aufnahme, der Zuleitung oder der Ableitung gesprochen wird, sind dabei stets vorteilhafte Ausgestaltungen für beide Feststoff-Einheiten oder wahlweise nur für eine der beiden Feststoff-Einheiten beschrieben.

Um jedoch im Einzelfall die beiden Feststoff-Einheiten, insbesondere für den Reiniger und für den Entkalker/Klarspüler, voneinander zu unterscheiden, ist vorzugsweise vorgesehen:
- Das Küchen- und/oder Gastronomiegerät umfasst eine erste Feststoff-Einheit mit einer ersten Aufnahme zum Einsetzen eines Behälters mit festem Zusatzstoff, insbesondere Reiniger, einer zur ersten Aufnahme führenden ersten Zuleitung zum Zuführen des, den Zusatzstoff ablösenden Fluids und einer von der ersten Aufnahme in Richtung Sammelbehälter führenden ersten Ableitung zum Abführen des Fluids samt abgelöstem Zusatzstoff.
- Ferner umfasst das Küchen- und/oder Gastronomiegerät eine zweite Feststoff-Einheit mit einer zweiten Aufnahme zum Einsetzen eines Behälters mit festem Zusatzstoff, insbesondere Entkalker oder Klarspüler, einer zur zweiten Aufnahme führenden zweiten Zuleitung zum Zuführen des, den Zusatzstoff ablösenden Fluids und einer von der zweiten Aufnahme in Richtung Sammelbehälter führenden zweiten Ableitung zum Abführen des Fluids samt abgelöstem Zusatzstoff.

Vorzugsweise ist eine erste Zuleitungs-Pumpe zum Pumpen des Fluids durch die erste Zuleitung und eine zweite Zuleitungs-Pumpe zum Pumpen des Fluids durch zweite Zuleitung vorgesehen. Alternativ hierzu kann das Küchen- und/oder Gastronomiegerät eine gemeinsame Zuleitungs-Pumpe zum Pumpen des Fluids durch die erste Zuleitung und die zweite Zuleitung umfassen. Wie bereits beschrieben, handelt es sich bei dem gepumpten Fluid um die Waschflotte aus dem Sammelbehälter und/oder um Frischwasser.

Bei Verwendung der gemeinsamen Zuleitungs-Pumpe ist bevorzugt vorgesehen, dass diese Pumpe zum wahlweisen Fördern des Fluids in die erste Zuleitung und in die zweite Zuleitung ausgebildet ist. Dies kann beispielsweise dadurch erreicht werden, dass die Pumpe einen Sauganschluss und zwei Druckanschlüsse hat, wobei die beiden Druckanschlüsse zu der ersten Zuleitung und zu der zweiten Zuleitung führen. Die Pumpe kann dabei so ausgestaltet sein, dass sie beispielsweise durch eine wechselnde Drehrichtung wahlweise in die erste Zuleitung oder in die zweite Zuleitung fördert.

Darüber hinaus kann bei Verwendung der gemeinsamen Zuleitungs-Pumpe auch ein Ventil stromab der gemeinsamen Zuleitungs-Pumpe zum Einsatz kommen, wobei das Ventil ausgebildet ist, um wahlweise das Fluid in die erste Zuleitung oder in die zweite Zuleitung zu leiten.

Insbesondere ist vorgesehen, dass das Küchen- und/oder Gastronomiegerät ein Steuergerät umfasst, das die verwendeten Pumpen ansteuert. Sollte ein Ventil stromab der gemeinsamen Zuleitungs-Pumpe zum Einsatz kommen, so kann auch solch ein Ventil mittels des Steuergerätes ansteuerbar sein.

Vorzugsweise ist das Steuergerät dazu ausgebildet, Fluid entweder durch die erste Feststoff-Einheit oder durch die zweite Feststoff-Einheit zu fördern, jedoch nicht durch beide Feststoff-Einheiten gleichzeitig. Dadurch wird erreicht, dass die Waschflotte entweder mit dem einen Zusatzstoff oder mit dem anderen Zusatzstoff angereichert wird.

Die erste Ableitung und die zweite Ableitung der beiden Feststoff-Einheiten können grundsätzlich getrennt voneinander bis zum Sammelbehälter führen. Bevorzugt ist jedoch vorgesehen, dass die erste Ableitung und die zweite Ableitung in eine gemeinsame Ableitung münden und diese gemeinsame Ableitung in den Sammelbehälter mündet.

Die erste Zuleitung und die zweite Zuleitung können getrennt voneinander am Sammelbehälter beginnen oder getrennt voneinander von der Waschflotten-Leitung abzweigen. In einer bevorzugten Ausführung ist vorgesehen, dass eine gemeinsame Zuleitung vom Sammelbehälter oder von der Waschflotten-Leitung abzweigt und sich diese gemeinsame Zuleitung in die erste Zuleitung und die zweite Zuleitung teilt.

Das Küchen- und/oder Gastronomiegerät umfasst vorzugsweise zumindest einen Sensor. Dieser Sensor ist zum Ermitteln einer Steuerungsgröße ausgebildet. Die Steuerungsgröße hängt von der Konzentration und/oder Dichte und/oder Trübung und/oder Leitwert und/oder PH-Wert an Zusatzstoff ab. Der zumindest eine Sensor ist insbesondere so angeordnet, dass er vom Fluid umflossen wird; entweder von dem Fluid, das über die Ableitung aus der Feststoff-Einheit kommt oder von der Waschflotte, die sich bereits im Sammelbehälter befindet. Es können mehrere der Sensoren zur Anwendung kommen, die sich auch an unterschiedlichen, im Folgenden noch detaillierter beschriebenen Positionen befinden können. Alternativ kann auch eine sensorlose Steuerung ausgeführt sein, welche z. b. über eine reine zeitgesteuerte Aktivierung der Pumpen eine gewisse Konzentration erzeugt kann.

Der zumindest eine Sensor ist vorzugsweise mit dem beschriebenen Steuergerät verbunden. Das Steuergerät ist vorzugsweise dazu ausgebildet, um in Abhängigkeit der Steuerungsgröße die Zuleitungs-Pumpe (insbesondere erste Zuleitungs-Pumpe und/oder zweite Zuleitungs-Pumpe, oder die gemeinsame Zuleitungs-Pumpe) anzusteuern. Darüber hinaus ist auch vorgesehen, dass in Abhängigkeit der Steuerungsgröße die Waschflotten-Pumpe ansteuerbar ist.

Der zumindest eine Sensor ist vorzugsweise als Leitwertsensor ausgebildet und kann somit erfassen, wie gut das Fluid elektrischen Strom leitet. Bei der Steuerungsgröße handelt es sich entsprechend um einen Leitwert oder um eine vom Leitwert abhängige Größe. Der Leitwert des Fluides ändert sich in Abhängigkeit der Konzentration an Zusatzstoff im Fluid.

Der Sensor kann sich in der Waschflotten-Leitung befinden.

Zusätzlich oder alternativ kann sich der Sensor in der Zuleitung (insbesondere in der ersten Zuleitung und/oder zweiten Zuleitung, oder in der gemeinsamen Zuleitung) befinden.

Zusätzlich oder alternativ kann sich der Sensor in der Ableitung (insbesondere in der ersten Ableitung und/oder zweiten Ableitung, oder in der gemeinsamen Ableitung) befinden.

Zusätzlich oder alternativ kann sich der Sensor in einer Zirkulationsleitung befinden. Die Zirkulationsleitung zirkuliert die Waschflotte, unter Umgehung des Lebensmittelraums und der Feststoff-Einheit(en). Beispielsweise zweigt die Zirkulationsleitung vom Sammelbehälter ab und führt wieder in den Sammelbehälter zurück. In der Zirkulationsleitung kann sich eine Zirkulationspumpe befinden. Die Zirkulationsleitung hat nicht nur den Effekt, die Waschflotte am Sensor vorbeizuführen, sondern kann auch für die Durchmischung der Waschflotte sorgen.

Die unterschiedlichen Positionen für den Sensor sind als Alternativen, aber auch in Kombination miteinander zu sehen, da nicht nur ein Sensor, sondern auch mehrere der Sensoren an unterschiedlichen Positionen verwendet werden können.

Wie beschrieben, ist das Küchen- und/oder Gastronomiegerät, insbesondere mittels des Steuergerätes, dazu ausgebildet, die Pumpen in Abhängigkeit der Steuerungsgröße anzusteuern. Insbesondere wird die zumindest eine Zuleitungs-Pumpe in Abhängigkeit der Steuerungsgröße angesteuert. Vorzugsweise ist das Küchen- und/oder Gastronomiegerät, insbesondere das Steuergerät, dazu ausgebildet, die Zuleitungs-Pumpe (insbesondere erste Zuleitungs-Pumpe und/oder zweite Zuleitungs-Pumpe, oder gemeinsame Zuleitungs-Pumpe) in Abhängigkeit der Steuerungsgröße ein- und auszuschalten und/oder in ihrer Drehzahl zu verändern und/oder in ihrer Fördermenge zu verändern.

Ist beispielsweise die gewünschte Steuerungsgröße noch nicht erreicht, kann die entsprechende Zuleitungs-Pumpe eingeschaltet werden. Um entsprechend mehr Zusatzstoff abzulösen, kann die Drehzahl der Zuleitungs-Pumpe erhöht werden und/oder die Fördermenge erhöht werden. Ergibt die Beobachtung der Steuerungsgröße beispielsweise, dass nur noch eine geringe Menge an Zusatzstoff in der Waschflotte fehlt, kann die entsprechende Zuleitungs-Pumpe in Drehzahl und/oder Fördermenge reduziert werden.

Wie noch detailliert anhand des Behälters beschrieben wird, ist vorgesehen, dass in dem festen Zusatzstoff innerhalb des Behälters zumindest ein Indikatorelement eingebettet ist. Dieses Indikatorelement besteht aus einem Indikatorstoff. Der Indikatorstoff weicht von dem Zusatzstoff ab, ist jedoch auch durch das Fluid ablösbar. Das Küchen- und/oder Gastronomiegerät ist vorzugsweise dazu ausgebildet, eine Indikatorgröße im Fluid zu erfassen, die von einer Konzentration des Indikatorstoffs abhängt.

Bei der Indikatorgröße kann es sich grundsätzlich um die oben definierte Steuerungsgröße, also beispielsweise den Leitwert des Fluides, handeln. Auch das Erfassen der Indikatorgröße kann mit dem bereits beschriebenen Sensor erfolgen. So ist insbesondere vorgesehen, dass der Indikatorstoff den Leitwert im Fluid stärker oder schwächer verändert als der Zusatzstoff. Dadurch ergibt sich am Sensor eine signifikante Änderung der erfassten Indikatorgröße, sobald der Indikatorstoff abgelöst wird.

Alternativ kann auch ein zusätzlicher Sensor verwendet werden, der speziell zum Erkennen der Indikatorgröße ausgebildet ist.

Durch die Verwendung des Indikatorelementes mit Indikatorstoff im Behälter kann beispielsweise erfasst werden, wieviel des Zusatzstoffes bereits aus dem Behälter abgelöst ist. Befindet sich das Indikatorelement beispielsweise in der Mitte des Behälters, so kann erfasst werden, wenn in etwa die Hälfte des Zusatzstoffes verbraucht ist. Befindet sich ein Indikatorelement in der Nähe des Behälterbodens, so kann beispielsweise erfasst werden, dass der Zusatzstoff annähernd oder vollständig aufgebraucht ist.

Das Küchen- und/oder Gastronomiegerät umfasst vorzugsweise eine Schutzanordnung für den beschriebenen Sensor; insbesondere zum Schutz des Sensors vor Verschmutzung.

Vorzugsweise umfasst die Schutzanordnung ein querschnittsverengendes Strömungselement vor dem Sensor, vorzugsweise unmittelbar vor dem Sensor. Dieses Strömungselement ist dazu ausgebildet, die Strömungsgeschwindigkeit des Fluides vor dem Sensor zu erhöhen. Dadurch können etwaige Verunreinigungen am Sensor oder an einem etwaigen Sieb weggespült werden. Bei dem Strömungselement handelt es sich beispielsweise um eine Querschnittsverengung in einer Leitung, insbesondere in einem Rohr oder einem Schlauch. Besonders bevorzugt wird dieses querschnittsverengende Strömungselement in der beschriebenen Zirkulationsleitung eingesetzt, wobei sich dann der Sensor in der Zirkulationsleitung befindet.

Zusätzlich oder alternativ sieht die Schutzanordnung zum Reinigen des Sensors vor, dass das Küchen- und/oder Gastronomiegerät (insbesondere das Steuergerät), dazu ausgebildet ist, eine, das Fluid am Sensor vorbeifördernde Pumpe, zur Reinigung des Sensors pulsierend anzusteuern. Bei dieser Pumpe kann es sich um die Zirkulationspumpe, die erste Zuleitungs-Pumpe, die zweite Zuleitungs-Pumpe, die gemeinsame Zuleitungs-Pumpe oder die Waschflotten-Pumpe handeln. Der Sensor ist dann entsprechend in einer Leitung vor oder nach der Pumpe angeordnet, so dass sich bei pulsierendem Betrieb der Pumpe etwaige Verunreinigungen vom Sensor lösen.

Zusätzlich oder alternativ zu den beschriebenen Maßnahmen, kann die Schutzanordnung für den Sensor auch ein Sieb umfassen. Das Sieb kann in Strömungsrichtung vor dem Sensor angeordnet sein. Jedoch kann sich das Sieb auch an dem Sensor befinden und somit den Sensor abdecken. Als Sieb wird im Rahmen vorliegender Erfindung insbesondere alles verstanden, was mehrere Öffnungen aufweist und dadurch zumindest manche Schmutzpartikel daran hindern kann, bis zu dem Sensor vorzudringen; jedoch ist das Sieb für das Fluid durchlässig, so dass das Fluid den Sensor umspülen kann.

Gemäß einer bevorzugten Ausführung befindet sich das Sieb im Sammelbehälter. Hierbei kann sich auch der Sensor im Sammelbehälter befinden und von dem Sieb abgedeckt sein. Allerdings ist es auch möglich, dass das Sieb den Einlauf in eine zum Sensor führende Leitung schützt. In den Sammelbehälter mündet zumindest eine Leitung, auf das Sieb gerichtet ist, um das Sieb freizuspülen. Bei dieser Leitung kann es sich um eine Frischwasser-Zuleitung oder um die Rückführung aus dem Lebensmittelraum oder um die Ableitung der Feststoff-Einheit handeln.

Des Weiteren ist vorgesehen, dass das Sieb den Sensor von einem Strömungskanal des Fluides trennt. Dieser Strömungskanal ist insbesondere durch eine Leitung gebildet. Der Sensor ragt dabei nicht in die Strömung des Fluides, sondern befindet sich seitlich des Strömungskanals. Durch das Sieb kann das Fluid zum Sensor strömen. Etwaige Schmutzpartikel werden jedoch von dem Sieb aufgehalten und insbesondere durch das Fluid am Sieb vorbeitransportiert. Besonders bevorzugt weist der Strömungskanal im Bereich des Siebes eine Querschnittsverengung auf und kann durch den Venturi-Effekt eine Strömung durch das Sieb hindurch und somit zum Sensor erzeugen.

Anstatt den Sensor neben dem Strömungskanal zu positionieren, ist bevorzugt vorgesehen, dass der Sensor in den Strömungskanal - also die entsprechende Leitung - des Fluides ragt und dabei von dem Sieb umgeben ist. Besonders bevorzugt ist der Sensor samt Sieb dabei zur tangentialen Anströmung angeordnet. Diese tangentiale Anströmung beschreibt, dass der Strömungskanal vor dem Sensor versetzt ist zum Strömungskanal nach dem Sensor. Dadurch ergibt sich eine relativ starke Strömung beidseitig des Siebes und somit eine entsprechende Freispülung des Siebes.

Besonders bevorzugt ist das Sieb so angeordnet, dass es zum Reinigen und/oder Auswechseln demontierbar ist. Besonders bevorzugt ist das Sieb werkzeuglos demontierbar.

Während dem gewollten Ablösen des Zusatzstoffes und/oder nach diesem Vorgang kann es zu einem übermäßigen Ablösen des Zusatzstoffes kommen, weil Luftfeuchtigkeit den Zusatzstoff ablösen kann. Gerade wenn die verwendeten Zusatzstoffe hygroskopische Eigenschaften aufweisen, kann die Feuchtigkeit aus der Umgebung diese Verhalten hervorrufen. Daher kann es vorkommen das der Zusatzstoff als zähflüssige Masse aus dem Behälter und somit aus der Aufnahme herausfließen. Im Folgenden wird dieser ungewollt abgelöste Zusatzstoff als "überschüssiger Zusatzstoff" bezeichnet.

Bevorzugt umfasst das Küchen- und/oder Gastronomiegerät einen Siphon in der Ableitung. Dieser Siphon dient dabei als Dampfsperre zwischen dem Sammelbehälter und der zumindest einen Aufnahme. Dadurch wird vermieden, dass Dampf aus der heißen Waschflotte im Sammelbehälter bis zur Aufnahme und somit bis zu dem Behälter mit Zusatzstoff vordringt. Solch ein Dampf könnte nämlich zu einem ungewollten Ablösen des festen Zusatzstoffes führen. Der ungewollt abgelöste Zusatzstoff könnte als zähflüssige Masse in Richtung des Sammelbehälters nachlaufen.

Bei Verwendung der gemeinsamen Ableitung für beide Feststoff-Einheiten kann sich der Siphon in der gemeinsamen Ableitung befinden. Allerding ist auch vorgesehen, dass jeweils ein Siphon in der ersten Ableitung und in der zweiten Ableitung angeordnet ist.

Des Weiteren kann ein ungewolltes Ablösen des festen Zusatzstoffes vermieden werden, indem der Zusatzstoff im Behälter nach der gewollten Ablösung möglichst schnell trocknet. Hierzu ist/sind ein Gebläse und/oder eine Belüftungsöffnung und/oder ein Kamin vorgesehen, dessen Luftstrom zum Trocknen des Zusatzstoffes zur Aufnahme und somit zum Behälter führt.

Durch das Gebläse kann Luft zur Aufnahme geblasen oder von der Aufnahme abgesaugt werden, wodurch ein Trocknen des Zusatzstoffes erreicht werden kann. Durch entsprechende Anordnung der Belüftungsöffnung oder des Kamines kann ebenfalls ein Luftstrom erzeugt werden, der zur Aufnahme führt und von der Aufnahme weiter über die Belüftungsöffnung abgeführt wird, insbesondere indem sich aufgrund von Temperaturunterschieden innerhalb des Gerätes und außerhalb des Gerätes ein Luftstrom ergibt, der bei entsprechender Anordnung der Belüftungsöffnung oder des Kamins an der Aufnahme und somit am Zusatzstoff vorbeiführbar ist.

Vorzugsweise ist vorgesehen, dass die zumindest eine Feststoff-Einheit eine Auffanganordnung in der Ableitung zum Auffangen des überschüssigen Zusatzstoffes umfasst. Insbesondere weist die erste Feststoff-Einheit eine solche Auffangordnung auf und die zweite Feststoff-Einheit weist ebenfalls solch eine Auffanganordnung auf. Die Auffanganordnungen für die beiden Feststoff-Einheiten können unterschiedlich ausgestaltet sein, insbesondere, da die unterschiedlichen Zusatzstoffe zu unterschiedlichem Verhalten hinsichtlich des überschüssigen Zusatzstoffes neigen können.

Die Auffanganordnung umfasst vorzugsweise einen Zwischenbehälter zum Auffangen des überschüssigen Zusatzstoffes, wobei die Ableitung in den Zwischenbehälter führt und aus dem Zwischenbehälter in Richtung Sammelbehälter weiterführt. Dabei kann der Zwischenbehälter unmittelbar an die Aufnahme angrenzen oder über eine entsprechende Leitung mit der Aufnahme verbunden sein.

Der Zwischenbehälter kann einen Überlauf aufweisen, der zum Sammelbehälter führt. Dadurch kann sich im Zwischenbehälter Fluid sammeln, um den überschüssigen Zusatzstoff zu lösen.

Ein Boden des Zwischenbehälters kann vorzugsweise zum Überlauf hin schräg ansteigen, so dass sich der überschüssige Zusatzstoff nicht unmittelbar am Überlauf sammelt, sondern am tiefsten Punkt des Zwischenbehälters.

Besonders bevorzugt ist der Überlauf als ein Saugheber ausgebildet. Dieser funktioniert nach dem Prinzip des Pythagoras-Bechers. Der als Saugheber ausgebildete Überlauf umfasst einen ansteigenden Strömungskanal, der mittels eines Übergangs in einen abfallenden Strömungskanal übergeht. Der Zwischenbehälter ist dabei zur Selbstentleerung höher als der Übergang befüllbar. Insbesondere ist das Steuergerät dazu ausgebildet, durch Ansteuern der zumindest einen Zuleitungs-Pumpe, den Zwischenbehälter höher als den Übergang aufzufüllen. Mittels eines Wasserstandes im Zwischenbehälter, der niedriger ist als der Übergang, kann zunächst der überschüssige Zusatzstoff teilweise oder vollständig aufgelöst werden. Daraufhin kann, insbesondere durch Ansteuern der Zuleitungs-Pumpe, der Wasserstand erhöht werden, bis er über den Übergang steigt. Dadurch kommt es zur Selbstentleerung mittels des Saughebers.

Des Weiteren ist bevorzugt eine Spülleitung vorgesehen, die unter Umgebung des Zusatzstoffes zum Zwischenbehälter führt. Vorzugsweise zweigt die Spülleitung von der Zuleitung stromab der zumindest einen Zuleitungs-Pumpe ab. Durch ein Ventil und/oder durch entsprechende Dimensionierung der Leitungen kann definiert werden, welche Menge an Fluid zum Zusatzstoff fließt und welche Menge an Fluid über die Spülleitung direkt zum Zwischenbehälter fließt. Dieses Fluid in der Spülleitung kann dazu genutzt werden, um den überschüssigen Zusatzstoff im Zwischenbehälter zu lösen.

Die Spülleitung kann in den Zwischenbehälter münden. Alternativ hierzu kann die Spülleitung mittels einer Venturi-Düse aus dem Zwischenbehälter Fluid absaugen. In der Venturi-Düse bzw. unmittelbar nach der Venturi-Düse vermischt sich das Fluid der Spülleitung mit dem abgesaugten Fluid aus dem Zwischenbehälter. Die Spülleitung mündet dann insbesondere nicht in Zwischenbehälter, sondern mündet stromab des Zwischenbehälters in die Ableitung oder direkt in den Sammelbehälter.

In einer bevorzugten Ausführung ist vorgesehen, dass der Zwischenbehälter auf Höhe der Aufnahme angeordnet ist, so dass ein erster Fluidstand im Zwischenbehälter die Aufnahme und somit den Behälter zum Ablösen des Zusatzstoffes flutet und ein zweiter Fluidstand, der niedriger ist als der erste Fluidstand und größer Null ist, die Aufnahme nicht oder nur weniger flutet. Wenn der zweite Fluidstand im Zwischenbehälter gehalten wird, kann sich der überschüssige Zusatzstoff lösen, der in den Zwischenbehälter nachgeflossen ist. Um noch mehr Zusatzstoff aus dem Behälter abzulösen, kann auf den ersten Fluidstand erhöht werden. Dabei wird der Behälter zumindest teilweise geflutet und es kommt zu einem Ablösen des Zusatzstoffes im Behälter.

Anstatt oder zusätzlich zum beschriebenen Zwischenbehälter kann die Auffanganordnung ein Leitungselement umfassen, das zum Auffangen des überschüssigen Zusatzstoffes ausgebildet ist.

Besonders bevorzugt erstreckt sich dieses Leitungselement über eine Leitungselement-Länge von zumindest 5 cm, insbesondere zumindest 10 cm. Zusätzlich oder alternativ weist das Leitungselement vorzugsweise lediglich ein geringes Gefälle von höchstens 30°, vorzugsweise höchstens 20°, oder ist horizontal ausgerichtet oder weist sogar eine Steigung gegenüber der Horizontalen auf.

Darüber hinaus kann das Leitungselement zumindest ein Strömungswiderstandselement, vorzugsweise mehrere Strömungswiderstandselemente, am Boden des Leitungselements aufweisen.

Das Strömungswiderstandselement liegt vorzugsweise geneigt, insbesondere quer, zu Strömungsrichtung.

Durch die entsprechende Länge und/oder das geringe Gefälle und/oder durch das zumindest eine Strömungswiderstandselement wird erreicht, dass sich der überschüssige Zusatzstoff in dem Leitungselement ansammelt und nicht weiterläuft bis zum Sammelbehälter.

Vorzugsweise ist/sind die zumindest eine Aufnahme, insbesondere die erste Aufnahme und die zweite Aufnahme, über dem Lebensmittelraum im Gehäuse des Küchen- und/oder Gastronomiegeräts angeordnet.

Der Zwischenbehälter und/oder das Leitungselement befinden sich vorzugsweise über dem Lebensmittelraum.

Vorzugsweise ist vorgesehen, dass die Zuleitung dazu ausgebildet ist, das Fluid wahlweise auf die Aufnahme und somit in den Behälter zum Ablösen des Zusatzstoffes, oder in die Auffanganordnung zu leiten. Dabei kann auch ein Teilstrom auf die Aufnahme und ein anderer Teilstrom in die Auffanganordnung geleitet werden. In der Auffanganordnung kann das Fluid zum Lösen des überschüssigen Zusatzstoffes genutzt werden.

Insbesondere ist vorgesehen, dass die Zuleitung dazu ausgebildet ist, in Abhängigkeit des Drucks in der Zuleitung, also insbesondere durch Ansteuerung der Zuleitungs-Pumpe, das Fluid wahlweise auf die Aufnahme oder die Auffanganordnung zu leiten.

Hierzu ist insbesondere ein Endstück der Zuleitung vorgesehen, das so ausgebildet und positioniert ist, dass bei einem ersten Druck in der Zuleitung das Fluid in die Auffanganordnung führt und bei einem vom ersten Druck abweichenden zweiten Druck, der vorzugsweise höher ist als der erste Druck, das Fluid auf die Aufnahme zum Ablösen des Zusatzstoffs führbar ist. Insbesondere weist das Endstück eine Hauptöffnung auf, durch die das Fluid bei dem zweiten Druck austritt und eine Nebenöffnung auf, durch die das Fluid bei dem ersten Druck austritt.

Des Weiteren ist bevorzugt vorgesehen, dass in den Sammelbehälter eine Frischwasser-Zuleitung führt. Diese Frischwasser-Zuleitung weist vorzugsweise ein ansteuerbares Ventil auf. Das Ventil ist vorzugsweise durch das genannte Steuergerät ansteuerbar. Vorzugsweise befindet sich in der Frischwasser-Zuleitung ein Durchfluss-Sensor, um die Menge an zufließendem Frischwasser zu bestimmen.

Des Weiteren umfasst das Küchen- und/oder Gastronomiegerät vorzugsweise eine Klappe. Diese Klappe deckt die zumindest eine Aufnahme ab. Besonders bevorzugt ist eine Klappe vorgesehen, die beide Aufnahmen, nämlich die erste Aufnahme und die zweite Aufnahme, abdeckt. Die Klappe ist betätigbar und kann somit geöffnet und geschlossen werden, um den zumindest einen Behälter in die Aufnahme einzusetzen oder den leeren Behälter zu entnehmen.

Vorzugsweise umfasst das Küchen- und/oder Gastronomiegerät einen Klappen-Sensor, der erfasst, ob die Klappe geschlossen und/oder geöffnet ist. Der Klappen-Sensor ist besonders bevorzugt als Helligkeits-Sensor ausgebildet und erfasst, ob die Klappe offen ("hell") oder geschlossen ("dunkel") ist. In einer alternative Ausführungsform ist der Klappensensor mittels einem elektromechanischen Schaltern (z.B. Microschalter u. ä) ausgeführt

Des Weiteren ist bevorzugt vorgesehen, dass die jeweilige Feststoff-Einheit einen Behälter-Sensor umfasst. Der Behälter-Sensor ist durch den eingesteckten Behälter betätigbar. So kann mittels des Behälter-Sensors ermittelt werden, ob der Behälter in der Aufnahme steckt.

Die Aufnahme, insbesondere die erste Aufnahme und die zweite Aufnahme, weist vorzugsweise eine Behälter-Dichtung auf, die gegenüber dem eingeführten Behälter abdichtet.

Die Erfindung umfasst ferner den beschriebenen Behälter, gefüllt mit festem Zusatzstoff, insbesondere Reiniger oder Entkalker/Klarspüler. Der Behälter ist ausgebildet zum Einführen, insbesondere Einstecken, in die Aufnahme des beschriebenen Küchen- und/oder Gastronomiegeräts.

Ferner umfasst die Erfindung bevorzugt ein System aus dem beschriebenen Küchen- und/oder Gastronomiegerät in Kombination mit dem zumindest einem beschriebenen Behälter. Die vorteilhaften Ausgestaltungen, wie sie im Rahmen des Küchen- und/oder Gastronomiegeräts beschrieben sind, finden entsprechend vorteilhafte Anwendung auf das System.

Vorzugsweise ist vorgesehen, dass der Behälter zumindest ein Indikatorelement mit Indikatorstoff an definierter Position im Zusatzstoff umfasst. Das Indikatorelement ist durch das Fluid aus dem Zusatzstoff ablösbar. Vorzugsweise ist das Indikatorelement leitwertverändernder als der Zusatzstoff. Das Indikatorelement erhöht oder verringert den Leitwert des Fluides somit anders als der Zusatzstoff.

Bevorzugt befinden sich im Zusatzstoff zumindest zwei Indikatorelemente an unterschiedlichen Positionen, um den Verbrauch an Zusatzstoff zumindest zweistufig zu erkennen.

Gemäß einer Variante ist der Behälter aus Kunststoff gefertigt, insbesondere einschichtig und steif. Alternativ dazu ist der Behälter aus einem flexiblen Mehrschicht-Material gefertigt, wobei das Mehrschicht-Material zumindest eine erste Schicht und eine zweite Schicht aufweist, wobei die erste Schicht aus Papier oder Karton ist und die zweite Schicht aus Kunststoff oder Metall ist. Das Mehrschicht-Material kann auch als Verbundmaterial bezeichnet werden. Es kann hierbei ein Mehrschicht-Material zum Einsatz kommen, wie es in ähnlicher Weise bei Getränkeverpackungen (Tetra-Pack) zum Einsatz kommt.

Der Behälter weist vorzugsweise einen Grundkörper und einen Deckel auf, wobei der Deckel eine Öffnung des Grundkörpers verschließt. An dieser Öffnung des Grundkörpers liegt der Zusatzstoff frei.

Vorzugsweise ist vorgesehen, dass der Deckel über eine Aufreißlasche mit dem Grundkörper des Behälters verbunden ist.

Zusätzlich oder alternativ ist bevorzugt vorgesehen, dass der Deckel mit dem Grundkörper verklebt oder verschweißt ist. Diese Verklebung oder Verschweißung wird bei Abnehmen des Deckels gelöst.

Zusätzlich oder alternativ ist bevorzugt vorgesehen, dass der Deckel werkzeuglos vom Grundkörper abnehmbar ist.

Zusätzlich oder alternativ ist bevorzugt vorgesehen, dass der Deckel zerstörungsfrei vom Grundkörper abnehmbar ist und somit insbesondere wiederaufsetzbar ist. Dadurch kann bei längeren Betriebspausen der Behälter entnommen und verschlossen werden.

Zusätzlich oder alternativ ist bevorzugt vorgesehen, dass der Behälter einen Verbindungsabschnitt umfasst, der den abgenommenen Deckel mit dem Grundkörper verbindet. Dadurch wird sichergestellt, dass der abgenommene Deckel nicht verlorengeht und beim Herausnehmen des Behälters wieder zur Verfügung steht, um den Behälter zu verschließen.

Weitere Einzelheiten, Vorteile und Merkmale der vorliegenden Erfindung ergeben sich aus nachfolgender Beschreibung eines Ausführungsbeispiels anhand der Zeichnungen. Es zeigen:
- Fig. 1: zwei Ansichten eines erfindungsgemäßen Küchen- und/oder Gastronomiegeräts gemäß einem Ausführungsbeispiel,
- Fig. 2: eine schematische Ansicht der Fluidkreisläufe im erfindungsgemäßen Küchen- und/oder Gastronomiegerät gemäß dem Ausführungsbeispiel,
- Fig. 3: ein schematisches Detail des Küchen- und/oder Gastronomiegeräts gemäß dem Ausführungsbeispiel mit Positionen des Sensors,
- Fig. 4 bis 8: schematische Darstellungen von Details des erfindungsgemäßen Küchen- und/oder Gastronomiegeräts gemäß dem Ausführungsbeispiel zur Verdeutlichung einer Schutzanordnung des Sensors,
- Fig. 9: eine schematische Darstellung eines Details des Küchen- und/oder Gastronomiegeräts gemäß dem Ausführungsbeispiel mit einer gemeinsamen Zuleitungs-Pumpe,
- Fig. 10: eine schematische Darstellung eines Details des erfindungsgemäßen Küchen- und/oder Gastronomiegeräts gemäß dem Ausführungsbeispiel mit Siphon,
- Fig. 11: eine schematische Darstellung eines Details des erfindungsgemäßen Küchen- und/oder Gastronomiegeräts gemäß dem Ausführungsbeispiel mit Gebläse,
- Fig. 12 bis 19: schematische Darstellungen von Details des erfindungsgemäßen Küchen- und/oder Gastronomiegeräts gemäß dem Ausführungsbeispiel mit einer Auffanganordnung samt Zwischenbehälter,
- Fig. 20 bis 22: schematische Darstellungen von Details des erfindungsgemäßen Küchen- und/oder Gastronomiegeräts gemäß dem Ausführungsbeispiel mit einer Auffanganordnung samt Leitungselement,
- Fig. 23 und 24: einen erfindungsgemäßen Behälter in einer ersten Variante zur Verwendung mit dem erfindungsgemäßen Küchen- und/oder Gastronomiegerät gemäß dem Ausführungsbeispiel,
- Fig. 25: eine schematische Darstellung zur Anordnung von Indikatorelementen in dem erfindungsgemäßen Behälter, und
- Fig. 26 und 27: schematische Darstellungen des erfindungsgemäßen Behälters in einer weiteren Variante zur Verwendung in dem erfindungsgemäßen Küchen- und/oder Gastronomiegerät gemäß dem Ausführungsbeispiel.

Im Folgenden wird anhand der Figuren die Ausgestaltung eines Küchen- und/oder Gastronomiegeräts 1 gemäß einem Ausführungsbeispiel näher erläutert. Die Figuren zeigen dabei das Küchen- und/oder Gastronomiegerät 1 und diverse optionale Ausgestaltungen in rein schematischen Darstellungen. Soweit nicht explizit anders erwähnt, wird stets auf alle Figuren Bezug genommen.

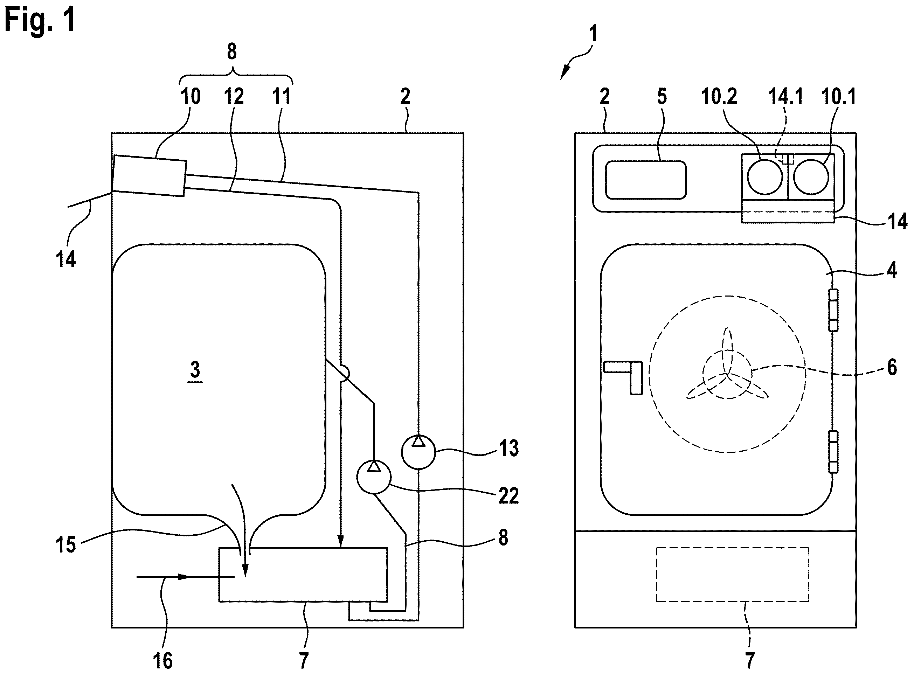

Fig. 1 zeigt das Küchen- und/oder Gastronomiegerät in einer schematischen Seitenansicht und in einer schematischen Frontansicht. Demgemäß umfasst das Küchen- und/oder Gastronomiegerät 1 ein Gehäuse 2. In diesem Gehäuse 2 befindet sich ein Lebensmittelraum 3 zur Aufbewahrung und/oder zur Behandlung von Lebensmitteln. Dieser Lebensmittelraum 3 ist mittels einer Tür 4 verschlossen.

In und/oder am Lebensmittelraum 3 befindet sich eine Heiz-/Umlufteinheit 6, die über eine Bedieneinheit 5 bedient werden kann. Mittels der Heiz-/Umlufteinheit 6 kann der Lebensmittelraum 3, insbesondere ausgebildet als Garraum, erwärmt und gegebenenfalls mit Dampf versorgt werden.

Innerhalb des Gehäuses 2, unter dem Lebensmittelraum 3, befindet sich ein Sammelbehälter 7 für die Waschflotte. Von diesem Sammelbehälter 7 führt eine Waschflotten-Leitung 8 zum Lebensmittelraum 3. Mittels einer Waschflotten-Pumpe 22 kann die Waschflotte aus dem Sammelbehälter 7 in den Lebensmittelraum 3 gefördert werden. Am unteren Ende des Lebensmittelraums 3 befindet sich eine Rückführung 15 zum Führen der Waschflotte in den Sammelbehälter 7. Dadurch ist eine Zirkulation der Waschflotte möglich.

In dem Gehäuse 2 sind zwei Feststoff-Einheiten 9 angeordnet, nämlich eine erste Feststoff-Einheit 9.1 und eine zweite Feststoff-Einheit 9.2. Sofern nicht zwischen den beiden Feststoff-Einheiten explizit differenziert wird, betreffen die hier beschriebenen Ausgestaltungen des Küchen- und/oder Gastronomiegeräts 1 stets beide Feststoff-Einheiten, wobei sie wahlweise für eine oder für beide der Feststoff-Einheiten 9 zur Anwendung kommen können.

Die erste Feststoff-Einheit 9.1 weist eine erste Aufnahme 10.1 auf. Die zweite Feststoff-Einheit 9.2 weist eine zweite Aufnahme 10.2 auf. Die Aufnahmen 10 sind jeweils zum Einsetzen eines Behälters 80 ausgebildet. In dem Behälter 80 befindet sich fester Zusatzstoff 81 in Form eines Reinigers oder Entkalkers/Klarspülers.

Wie die schematischen Darstellungen in Fig. 1 zeigen, befinden sich die Aufnahmen 10 im Inneren des Gehäuses 2 über dem Lebensmittelraum 3. Über eine Klappe 14 können die Aufnahmen 10 verschlossen werden. Durch Öffnen der Klappe 14 ist es möglich, die Behälter 80 in die Aufnahmen 10 einzusetzen bzw. auszuwechseln.

Im Bereich der Klappe 14 befindet sich ein Klappensensor 14.1, der erfassen kann, ob die Klappe 14 geöffnet oder geschlossen ist.

Des Weiteren umfasst die einzelne Feststoff-Einheit 9 jeweils eine Zuleitung 11, durch die das Fluid aus dem Sammelbehälter 7 bis zur Aufnahme 10 geleitet werden kann. Wie noch im Detail erläutert wird, kann die Zuleitung 11 durch eine erste Zuleitung 11.1, eine zweite Zuleitung 11.2 oder gegebenenfalls auch durch eine gemeinsame Zuleitung 11.3 gebildet sein.

Von der jeweiligen Aufnahme 10 zum Sammelbehälter 7 führt eine Ableitung 12; wie im Detail erläutert wird, handelt es sich um eine erste Ableitung 12.1, eine zweite Ableitung 12.2 und gegebenenfalls eine gemeinsame Ableitung 12.3.

Eine Zuleitungs-Pumpe 13 pumpt das Fluid aus dem Sammelbehälter 7 zur Aufnahme 10. Im Detail können eine erste Zuleitungs-Pumpe 13.1, eine zweite Zuleitungs-Pumpe 13.2 oder gegebenenfalls eine gemeinsame Zuleitungs-Pumpe 13.3 zur Anwendung kommen.

Fig. 1 verdeutlicht rein schematisch eine Frischwasser-Zuleitung 16, die es ermöglicht, Frischwasser in den Sammelbehälter 7 zu füllen.

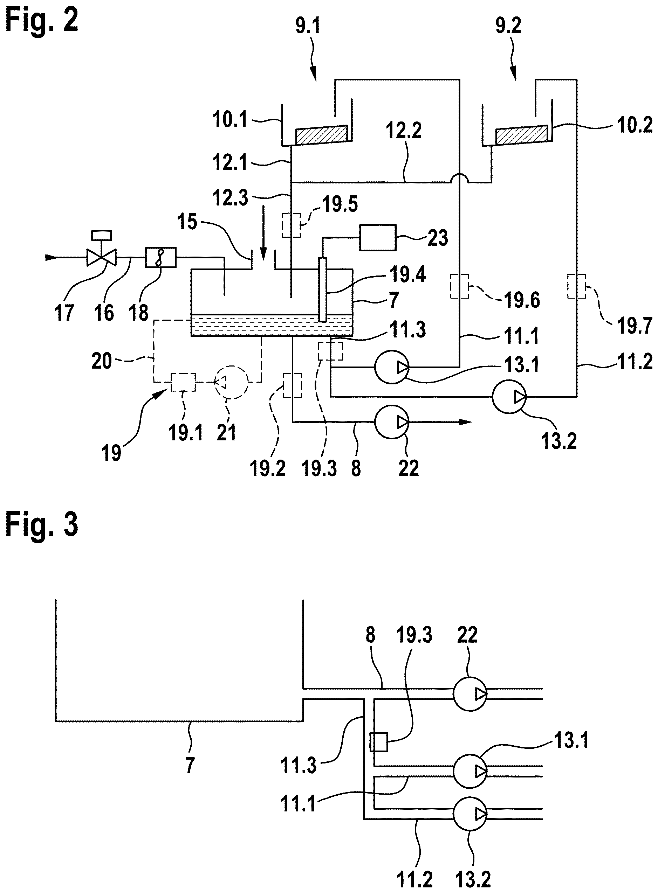

Die schematische Darstellung in Fig. 2 zeigt, dass sich in der Frischwasser-Zuleitung 16 ein Frischwasser-Ventil 17 und ein Durchfluss-Sensor 18 befinden können, wie dies im allgemeinen Teil der Beschreibung erläutert wurde.

Des Weiteren wurde im allgemeinen Teil der Beschreibung erläutert, dass das Küchen- und/oder Gastronomiegerät 1 vorzugsweise einen Sensor 19 umfasst, mit dem die Steuerungsgröße ermittelt werden kann. Diese Steuerungsgröße wiederum ist von der Konzentration an Zusatzstoff abhängig.

Der Sensor 19 ist insbesondere mit einer Steuergerät 23 des Küchen- und/oder Gastronomiegeräts 1 verbunden. Dieses Steuergerät 23 ist in Fig. 2 rein schematisch eingezeichnet. Das Steuergerät 23 kann, wie dies im allgemeinen Teil der Beschreibung erläutert wurde, in Abhängigkeit der Steuerungsgröße, die über den Sensor 19 ermittelt wird, zumindest die Zuleitungs-Pumpen 13 ansteuern.

Fig. 2 und 3 verdeutlichen, dass der Sensor 19 an unterschiedlichen Positionen eingesetzt werden kann. Wie bereits beschrieben wurde, können auch mehrere der Sensoren 19 an diesen unterschiedlichen Positionen zur Anwendung kommen.

Eine erste Sensorposition 19.1 befindet sich in einer Zirkulationsleitung 20, die vom Sammelbehälter 7 abzweigt und direkt wieder in den Sammelbehälter 7 führt. In dieser Zirkulationsleitung 20 kann sich eine Zirkulationspumpe 21 befinden.

Eine zweite Sensorposition 19.2 befindet sich Waschflotten-Leitung 8.

Eine dritte Sensorposition 19.3 befindet sich in der gemeinsamen Zuleitung 11.3. Diese gemeinsame Zuleitung 11.3 zweigt gemäß Fig. 2 entweder vom Sammelbehälter 7 oder gemäß Fig. 3 von der Waschflotten-Leitung 8 ab. Die gemeinsame Zuleitung 11.3 teilt sich auf in die erste Zuleitung 11.1 und in die zweite Zuleitung 11.2.

Eine vierte Sensorposition 19.4 befindet sich im Sammelbehälter 7 und erfasst die Steuerungsgröße direkt in der Waschflotte, die sich im Sammelbehälter 7 befindet.

Eine fünfte Sensorposition 19.5 befindet sich in der gemeinsamen Ableitung 12.3. Die erste Ableitung 12.1 und die zweite Ableitung 12.2 münden in diese gemeinsame Ableitung 12.3, die ihrerseits bis zum Sammelbehälter 7 führt. Alternativ ist es auch möglich, in der ersten Ableitung 12.1 und in der zweiten Ableitung 12.2 jeweils einen Sensor 19 zu platzieren.

Eine sechste Sensorposition 19.6 befindet sich der ersten Zuleitung 11.1, insbesondere stromab der zugehörigen ersten Zuleitungs-Pumpe 13.1.

Eine siebte Sensorposition 19.7 befindet sich in der zweiten Zuleitung 11.2, insbesondere stromab der zugehörigen zweiten Zuleitungs-Pumpe 13.2. Insbesondere ist vorgesehen, zwei der Sensoren 19, einmal an der sechsten Position 19.6 und einmal an der siebten Position 19.7 anzuwenden.

Fig. 2 und 3 zeigen jeweils eine Pumpe in der ersten Zuleitung 11.1 und in der zweiten Zuleitung 11.2, nämlich die erste Zuleitungs-Pumpe 13.1 und die zweite Zuleitungs-Pumpe 13.2.

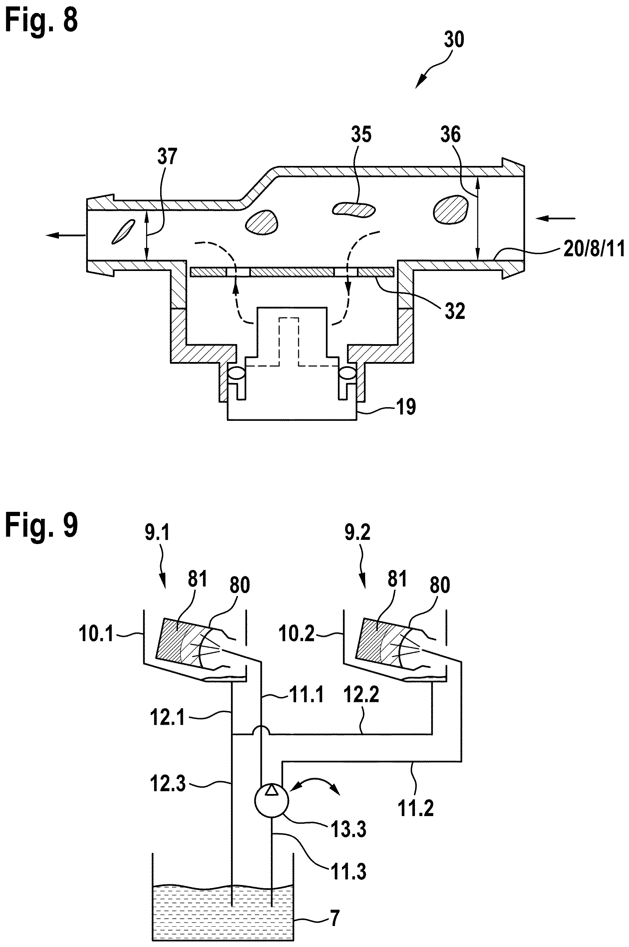

Alternativ hierzu kann - gemäß Fig. 9 - auch eine gemeinsame Zuleitungs-Pumpe 13.3 zur Anwendung kommen. Dabei führt die gemeinsame Zuleitung 11.3 zur gemeinsamen Zuleitungs-Pumpe 13.3. Die Pumpe kann, beispielsweise durch Ändern ihrer Drehrichtung, wahlweise in die erste Zuleitung 11.1 oder in die zweite Zuleitung 11.2 fördern. Dies ist im allgemeinen Teil der Beschreibung erläutert und gilt entsprechend für das Ausführungsbeispiel.

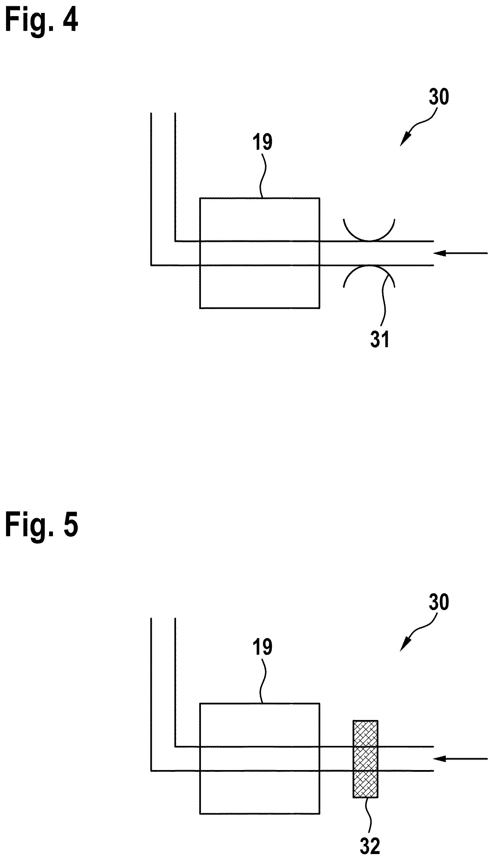

Fig. 4 bis 8 verdeutlichen rein schematisch unterschiedliche Ausgestaltungen einer Schutzanordnung 30, die einzeln oder in Kombination zum Schutz des Sensors 19 vor Verschmutzung zur Anwendung kommen können.

Fig. 4 verdeutlicht, dass vor dem Sensor 19 ein Strömungselement 31 zur Querschnittsverengung eingesetzt werden kann. Dieses Strömungselement 31 erhöht die Strömungsgeschwindigkeit, wodurch der Sensor 19 freigespült werden kann.

Fig. 5 verdeutlicht, dass vor dem Sensor 19 ein Sieb 32 eingesetzt werden kann, um etwaige Schmutzpartikel aufzuhalten.

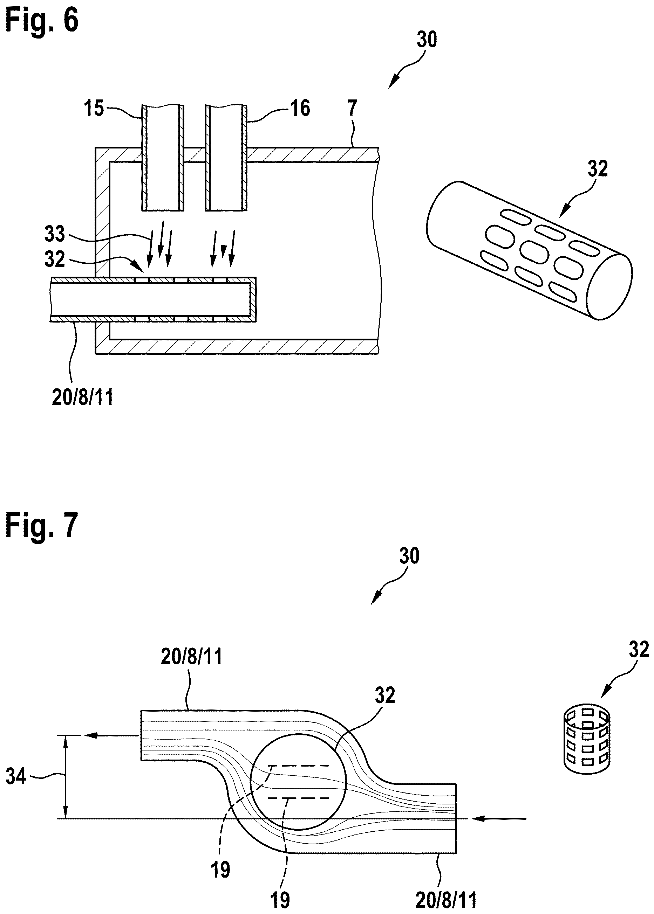

Fig. 6 verdeutlicht, dass solch ein Sieb 32 nicht nur in einem Strömungskanal eingesetzt werden kann, sondern auch in dem Sammelbehälter 7. Fig. 6 zeigt rein schematisch, dass aus dem Sammelbehälter eine Leitung führt, nämlich beispielsweise die Zirkulationsleitung 20, die Waschflotten-Leitung 8 oder die Zuleitung 11. Im Inneren des Sammelbehälters befindet sich das Sieb 32, das Schmutzpartikel möglichst daran hindert, in die Zirkulationsleitung 20, die Waschflotten-Leitung 8 oder die Zuleitung 11 einzudringen. An ähnlicher Position kann sich aber auch unmittelbar der Sensor 19 befinden und vom Sieb 32 abgedeckt sein.

Verdeutlicht wird in Fig. 6, dass das Sieb 32 im Sammelbehälter 7 so positioniert ist, dass eine in den Sammelbehälter 7 mündende Leitung auf das Sieb 32 zum Freispülen des Siebes gerichtet ist. Schematisch dargestellt ist eine Freispülung 33, die dabei auf das Sieb 32 wirkt. Bei dieser in den Sammelbehälter mündenden Leitung kann es sich beispielsweise um die Rückführung 15, die Frischwasser-Zuleitung 16 oder auch um eine der Ableitungen 12 handeln.

Fig. 7 verdeutlicht rein schematisch die Anordnung des Sensors 19 mit einem den Sensor 19 umgebenden Sieb 32 im Strömungskanal, also insbesondere in einer der Leitungen, in denen gemäß der Sensorpositionen 19.1 bis 19.7 des Sensors 19 angeordnet sein kann. Fig. 7 verdeutlicht, dass die Anströmung des Siebes 32 dabei tangential erfolgen kann. Entsprechend ist der Strömungskanal vor dem Sieb 32 relativ zum Strömungskanal nach dem Sieb 32 um einen Versatz 34 verschoben, so dass es zu der tangentialen Anströmung kommt.

Fig. 8 verdeutlicht rein schematisch, dass der Sensor 19 neben dem Strömungskanal angeordnet werden kann, wobei das Sieb 32 den Sensor 19 vom Strömungskanal trennt. Dadurch wird erreicht, dass etwaige Schmutzpartikel 35 im Strömungskanal weitertransportiert werden und dabei nicht das Sieb 32 zusetzen.

Insbesondere verdeutlicht Fig. 8, dass ein erster Strömungsquerschnitt 36 größer ausgestaltet werden kann als ein zweiter Strömungsquerschnitt 37. Der erste Strömungsquerschnitt 36 befindet sich dabei stromauf des zweiten Strömungsquerschnitts 37. Durch diese Ausgestaltung der beiden Strömungsquerschnitte 36, 37 wird ein Venturi-Effekt erzeugt - wie bei einer Venturidüse -, der eine Strömung durch das Sieb 32 hindurch und somit zum Sensor 19 erzeugt.

Bei der gemäß Fig. 7 oder Fig. 8 dargestellten Leitung zur Bildung des Strömungskanals kann es sich insbesondere um die Zirkulationsleitung 20, die Waschflotten-Leitung 8 oder die Zuleitung 11 handeln.

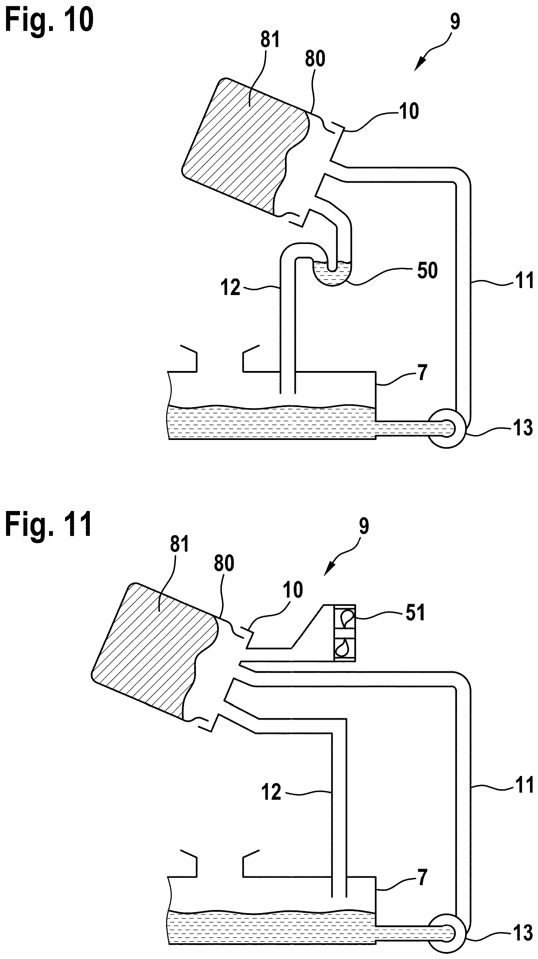

Fig. 10 verdeutlicht, dass in der Ableitung 12 ein Siphon 50 verwendet werden kann. Der Siphon 50 dient insbesondere als Dampfsperre, so dass etwaiger Dampf aus dem Sammelbehälter 7 nicht zu einem ungewollten Ablösen und/oder Erwärmen des Zusatzstoffes 81 im Behälter 80 führt.

Fig. 11 verdeutlicht rein schematisch, dass mittels eines Gebläses 51, dessen Luftstrom auf die Aufnahme 10 gerichtet ist, der Zusatzstoff 81 getrocknet werden kann. Auch dadurch kann, gegebenenfalls zusätzlich oder alternativ zum Siphon 50, ein ungewolltes Ablösen und/oder Erwärmen des Zusatzstoffes 81 vermieden werden.

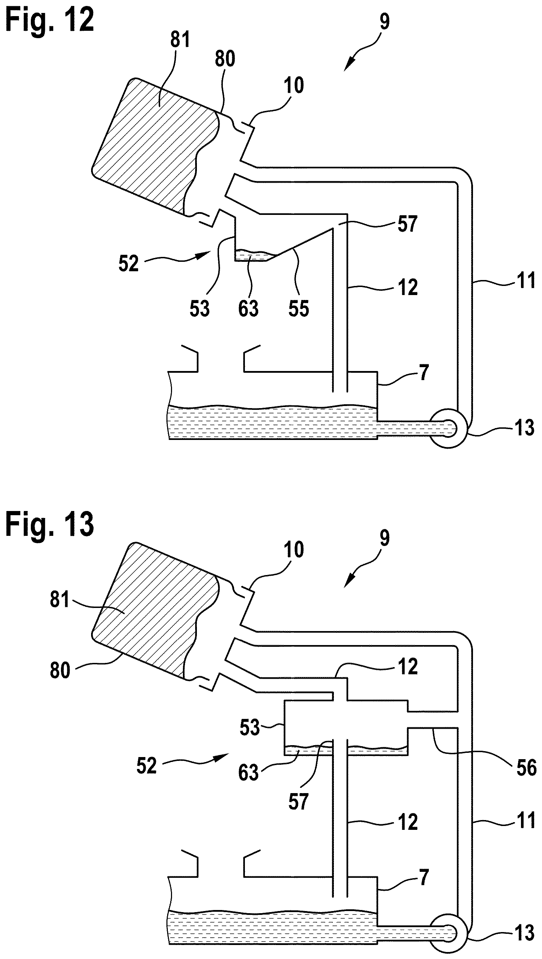

Fig. 12 und ff. zeigen die Verwendung einer Auffanganordnung 52, mit der überschüssiger Zusatzstoff 63, der insbesondere zähflüssig aus dem Behälter 80 herausfließt, aufgefangen werden kann.

Hierzu kann die Auffanganordnung 52 einen Zwischenbehälter 53 umfassen, wie dies beispielsweise Fig. 12 zeigt. Dieser Zwischenbehälter 53 befindet sich in der Ableitung 12 und kann dabei entweder über eine Leitung mit der Aufnahme 10 verbunden sein oder sich unmittelbar an die Aufnahme 10 anschließen.

Fig. 12 zeigt, dass der Zwischenbehälter 53 einen Überlauf 57 aufweisen kann, so dass eine gewisse Menge an Fluid in dem Zwischenbehälter 53 gehalten werden kann.

Der Boden 55 des Zwischenbehälters 53 kann zum Überlauf 57 hin ansteigen.

Fig. 13 verdeutlicht, dass in den Zwischenbehälter 53 eine Spülleitung 56 führen kann. Diese Spülleitung 56 zweigt von der Zuleitung 11 ab.

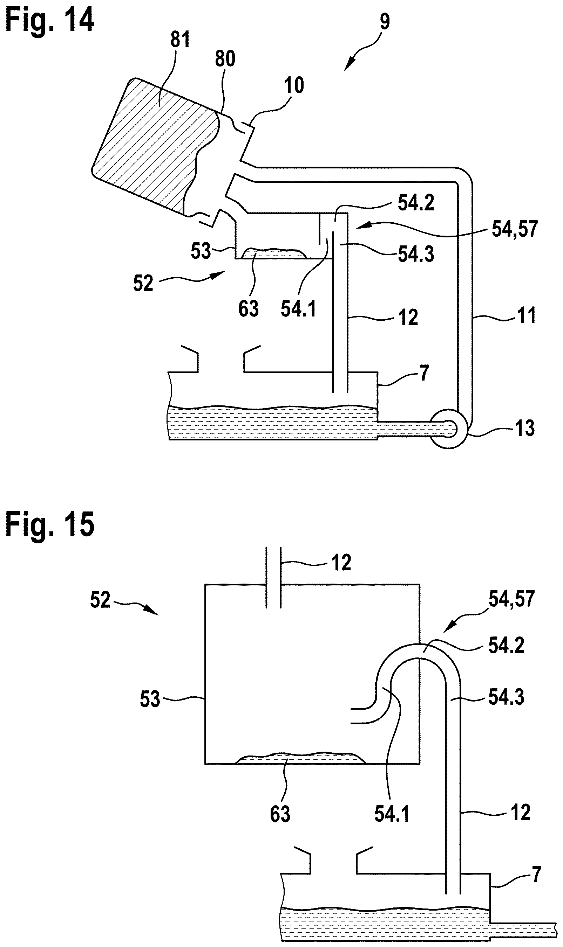

Fig. 14, 15 und 16 zeigen die Ausgestaltung des Überlaufs 57 als Saugheber 54. Dabei ist gezeigt, dass der Saugheber 54 einen ansteigenden Strömungskanal 54.1 und einen abfallenden Strömungskanal 54.3 umfasst. Die beiden Strömungskanäle 54.1 und 54.3 sind über einen Übergang 54.2 miteinander verbunden. Steigt der Fluidspiegel im Zwischenbehälter 53 über diesen Übergang 54.2, kommt es zur Selbstentleerung des Zwischenbehälters 53.

Fig. 14 zeigt, dass der Saugheber 54 durch eine einfache Anordnung von Trennwänden erreicht werden kann.

Gemäß Fig. 15 kann der Saugheber 54 durch eine entsprechende Ausgestaltung eines gebogenen Rohrs erreicht werden.

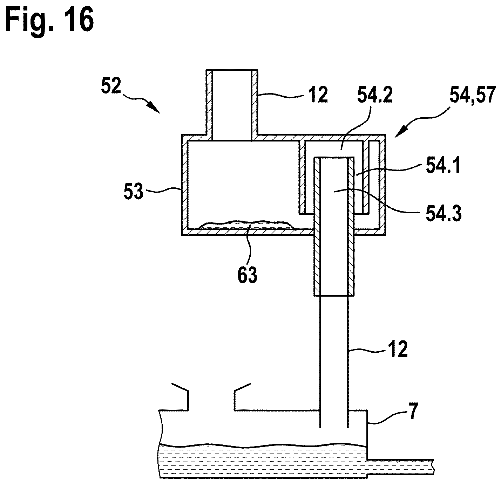

Fig. 16 zeigt die Ausgestaltung des Saughebers 54 durch zwei ineinander ragende Rohrstücke, so dass radial außerhalb des inneren Rohrs der ansteigende Strömungskanal 54.1 und innerhalb des inneren Rohrs der abfallende Strömungskanal 54.3 gebildet ist.

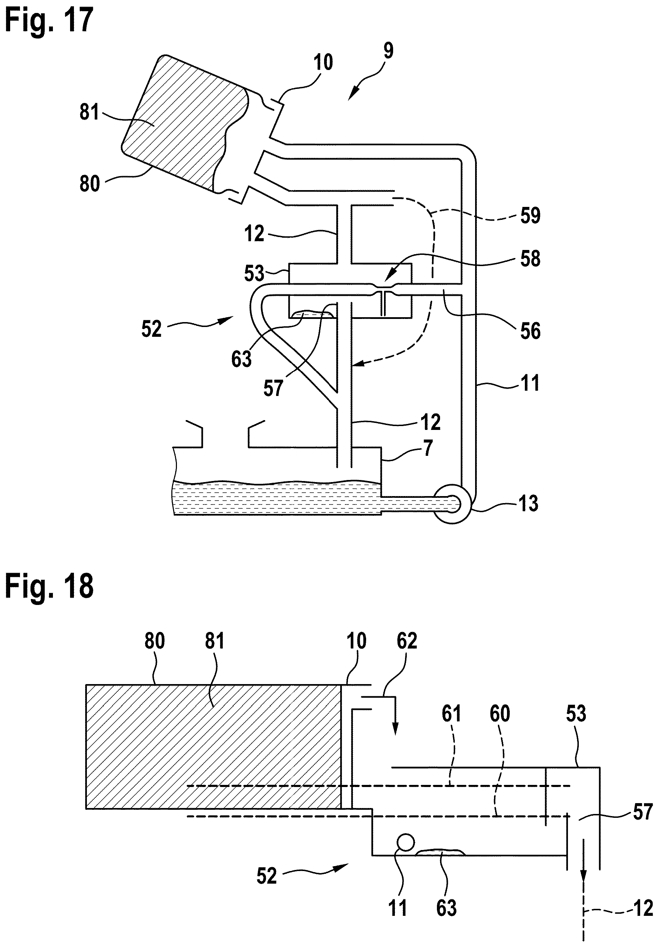

Fig. 17 verdeutlicht, dass die Spülleitung 56 nicht, wie dies in Fig. 13 gezeigt ist, in den Zwischenbehälter 53 münden muss, sondern auch durch eine Venturidüse 58 führen kann. Mittels dieser Venturidüse 58 kann Fluid aus dem Zwischenbehälter 53 gesaugt werden. Stromab der Venturidüse 58 führt die Spülleitung 56 in die Ableitung 12 oder alternativ direkt in den Sammelbehälter 7.

Unabhängig von der Sammelleitung 56 und der Venturidüse 58, zeigt Fig. 17, dass ein Bypass 59 zur Anwendung kommen kann, der zwischen Aufnahme 10 und Zwischenbehälter 53 abzweigt und etwaiges überschüssiges Fluid unter Umgehung des Zwischenbehälters 53 in Richtung Sammelbehälter 7 führt.

Fig. 18 verdeutlicht die Anordnung des Zwischenbehälters 53 auf der gleichen Höhe wie die Aufnahme 10. Dabei ist insbesondere vorgesehen, dass die Zuleitung 11 in den Zwischenbehälter 53 führt und über den Zwischenbehälter 53 somit indirekt bis zur Aufnahme 10 führt. Fig. 18 zeigt einen ersten Wasserstand 60 und einen zweiten Wasserstand 61, die insbesondere durch Ansteuerung der Zuleitungs-Pumpe 13 erreicht werden können. Durch Füllen auf den zweiten Wasserstand 61 wird die Aufnahme 10 bzw. wird der Behälter 80 geflutet und es kommt zum Ablösen des Zusatzstoffes 81 aus dem Behälter 80. Durch Absenken auf den ersten Wasserstand 60 wird in erster Linie nur noch der Zwischenbehälter 53 teilweise unter Wasser gesetzt, wodurch etwaiger überschüssiger Zusatzstoff 63 gelöst werden kann, der sich im Zwischenbehälter 53 befindet.

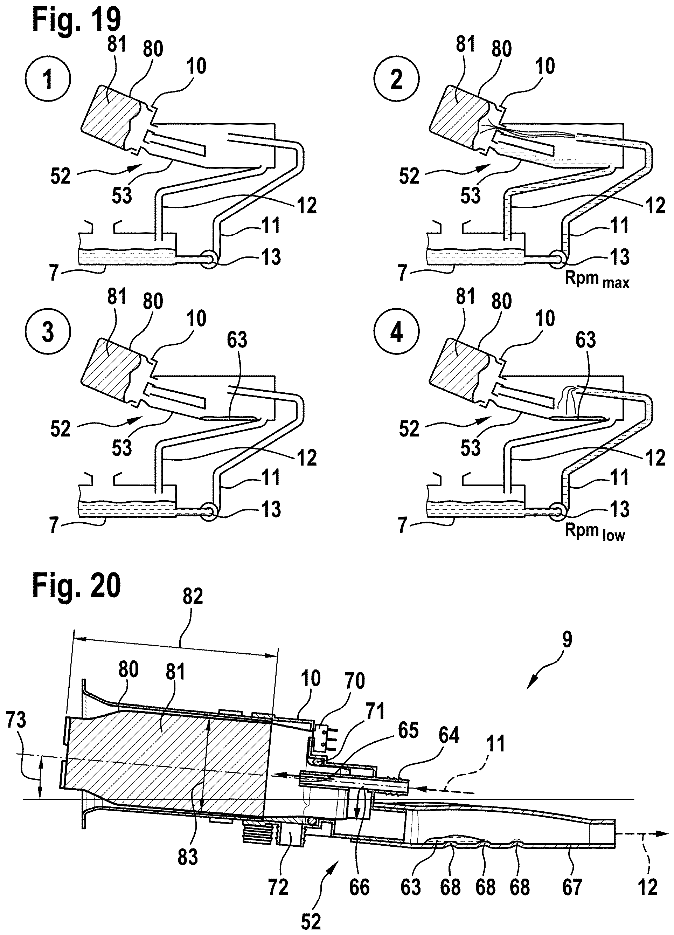

Fig. 19 zeigt rein schematisch anhand vier unterschiedlicher Darstellungen, dass die Zuleitung 11 dazu ausgebildet sein kann, das Fluid wahlweise auf die Aufnahme 10 zum Ablösen des Zusatzstoffes 81 oder in die Auffanganordnung 52, insbesondere den Zwischenbehälter 53, zu leiten. Die Darstellung 1 in Fig. 19 verdeutlicht den Zustand, ohne dass die Zuleitungs-Pumpe 13 in Betrieb ist. Gemäß der Darstellung 2 ist die Zuleitungspumpe 13 mit relativ hoher Drehzahl in Betrieb. Dadurch spritzt das Fluid entsprechend weit und kann auf den Zusatzstoff 81 treffen.

Die Darstellung 3 in Fig. 19 verdeutlicht, dass nach solch einem Vorgang zum Ablösen des Zusatzstoffes 81 sich überschüssiger Zusatzstoff 63 in dem Zwischenbehälter 53 sammeln kann. Wird nun gemäß Darstellung 4 in Fig. 19 die Zuleitungs-Pumpe 13 mit entsprechend geringer Drehzahl betrieben, so spritzt das Fluid nicht bis auf den Zusatzstoff 81, sondern fließt in den Zwischenbehälter 53 und kann den überschüssigen Zusatzstoff 63 aufnehmen.

Wie dieser in Fig. 19 dargestellte Ablauf konstruktiv ausgestaltet werden kann, zeigt beispielsweise Fig. 20.

In Fig. 20 ist die Aufnahme 10 mit eingestecktem Behälter 80 dargestellt. Zu sehen ist ein Zufuhrstutzen 64, der das Ende der Zuleitung 11 bildet. Dieser Zufuhrstutzen 64 weist eine Hauptöffnung 65 auf, die auf die Aufnahme 10 und somit auf den Zusatzstoff 81 im Behälter 80 gerichtet ist. Insbesondere in der Mantelfläche des Zufuhrstutzens 64 befindet sich eine Nebenöffnung 66, durch die das Fluid bei entsprechend geringem Druck austreten kann und dadurch direkt, unter Umgehung des Zusatzstoffes 81, in die Auffanganordnung 52 fließen kann.

Unabhängig von der Verwendung des Zufuhrstutzens 64, zeigt Fig. 20, dass die Auffanganordnung 52 keinen Zwischenbehälter 53 sondern ein Leitungselement 67 aufweisen kann. Dieses Leitungselement 67 ist mit entsprechend geringer Neigung und entsprechender Länge angeordnet, so dass sich der überschüssige Zusatzstoff 63 in dem Leitungselement 67 sammelt und nicht ohne Weiteres bis in den Sammelbehälter 7 fließt.

Insbesondere befindet sich das Leitungselement 67 unmittelbar im Anschluss an die Aufnahme 10 und somit insbesondere über dem Lebensmittelraum 3.

Fig. 20 verdeutlicht auch, dass in dem Leitungselement 67 mehrere Strömungswiderstandselemente 68 ausgebildet sind, wie dies im allgemeinen Teil der Beschreibung erläutert ist.

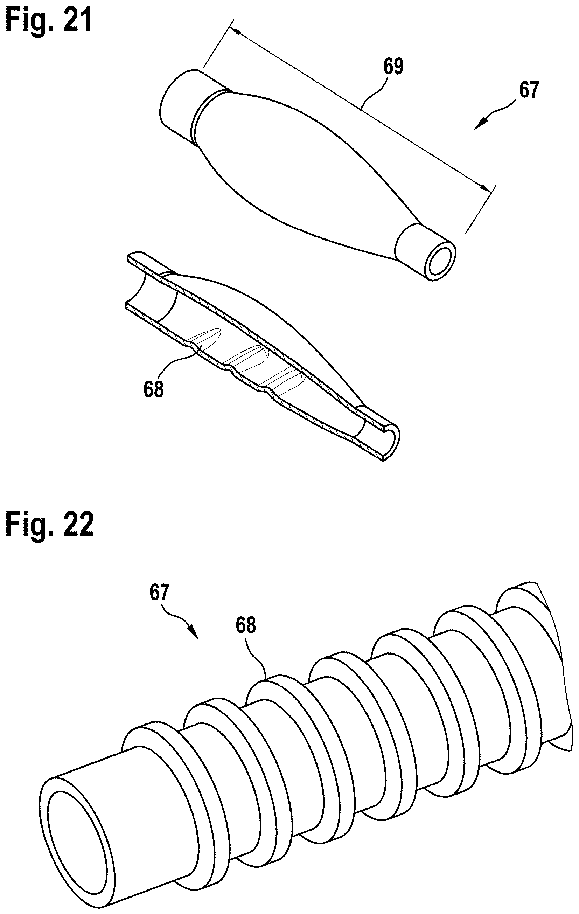

Fig. 21 zeigt das Leitungselement 67 mit seiner Leitungselement-Länge 69, die insbesondere mehrere cm beträgt. Im aufgeschnittenen Zustand, dargestellt in Fig. 21, ist zu sehen, dass das Leitungselement 67 entsprechend querliegende Strömungswiderstandselemente 68 aufweist.

Fig. 22 zeigt eine alternative Ausgestaltung für das Leitungselement 67. Demgemäß kann als Leitungselement 67 auch ein Rohr verwendet werden, das umlaufende Verdickungen (auch als Wülste bezeichnet) aufweist. Auch durch diese umlaufenden Verdickungen werden letztendlich am Boden des Leitungselementes 67 mehrere Strömungswiderstandselemente 68 gebildet.

Fig. 20 verdeutlicht ferner, unabhängig von den detailliert gezeigten konstruktiven Ausgestaltungen, dass die Aufnahme 10 einen Behälter-Sensor 70 aufweisen kann. Dieser Behälter-Sensor 70 erfasst, ob der Behälter 80 eingesetzt ist.

Ferner zeigt Fig. 20, unabhängig von den detailliert gezeigten konstruktiven Ausgestaltungen, dass die Aufnahme 10 eine Behälterdichtung 71 aufweisen kann, die gegenüber dem Behälter 80 abdichtet.

Fig. 20 zeigt, dass die Aufnahme 10, unabhängig von den detailliert gezeigten konstruktiven Ausgestaltungen, einen Aufnahme-Ablauf 72 aufweisen kann. Dieser Aufnahme-Ablauf 72 ist in der Aufnahme 10 insbesondere außerhalb der Behälterdichtung 71 angeordnet, so dass etwaiges Fluid, welches sich in diesem äußeren Raum der Aufnahme 10 ansammelt, abfließen kann.

Fig. 20 zeigt, unabhängig von der im Detail gezeigten konstruktiven Ausgestaltung, dass die Aufnahme 10 zum Einsetzen des Behälters 80 mit einem Aufnahme-Winkel 73 gegenüber der Horizontalen ausgebildet ist. Dieser Aufnahme-Winkel 73 beträgt vorzugsweise 1° bis 20°.

Fig. 20 verdeutlicht ferner, unabhängig von der gezeigten konstruktiven Ausgestaltung, dass der feste Zusatzstoff 81 im Behälter 80 vor dem erstmaligen Ablösen des Zusatzstoffes eine Zusatzstofflänge 82 und einen Zusatzstoff-Durchmesser 83 aufweist. Dabei ist insbesondere vorgesehen, dass die Zusatzstofflänge 82 größer ist als der Zusatzstoff-Durchmesser 83.

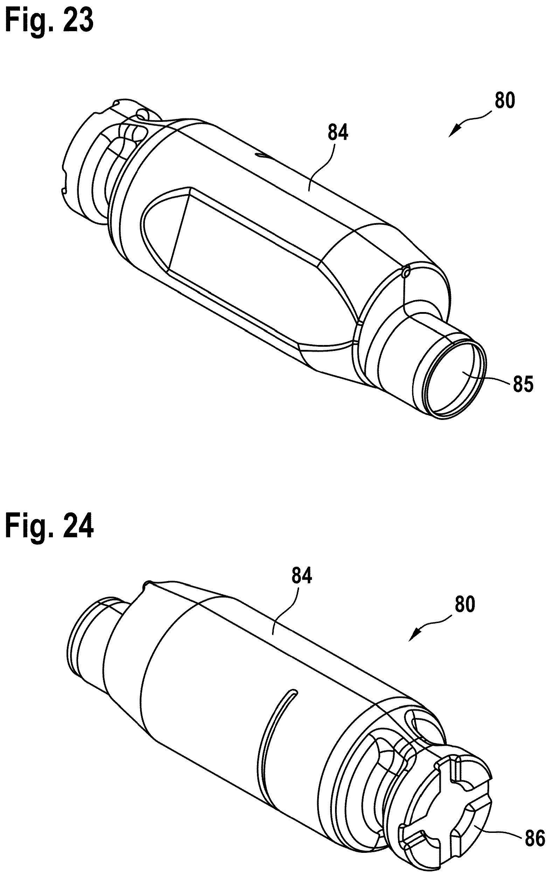

Figuren 23 und 24 zeigen in zwei unterschiedlichen Ansichten eine mögliche Ausgestaltung des Behälters 80 aus Kunststoff. Gezeigt ist, dass der Behälter 80 eine Außenkontur 84 aufweist, die insbesondere zumindest eine Abflachung umfasst.

Des Weiteren ist bevorzugt vorgesehen, dass die erste Aufnahme 10.1 eine andere Innenkontur aufweist als die zweite Aufnahme 10.2. Dadurch ist sichergestellt, dass nur der richtige Behälter 80 auch in die richtige Aufnahme 10 einsetzbar ist.

Ferner zeigen Figuren 23 und 24, dass der Behälter 80 eine asymmetrisch angeordnete Öffnung 85 aufweist. Gegenüberliegend zur Öffnung 85 befindet sich ein Griffelement 86.

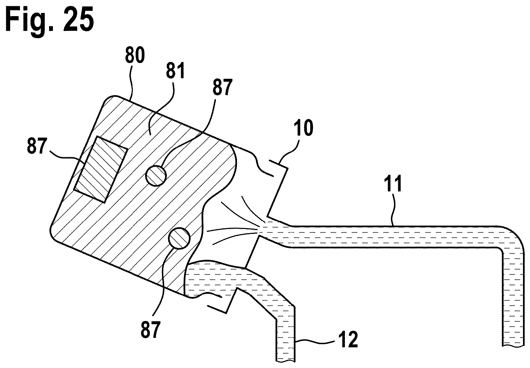

Fig. 25 verdeutlicht rein schematisch, dass in dem Zusatzstoff 81 im Behälter 80 mehrere Indikatorelemente 87 angeordnet werden können. Diese Indikatorelemente 87 aus Indikatorstoff können mit dem Fluid abgelöst werden. Dadurch kann der Füllstand an Zusatzstoff 81 im Behälter 80 ermittelt werden, wie dies im allgemeinen Teil der Beschreibung erläutert ist.

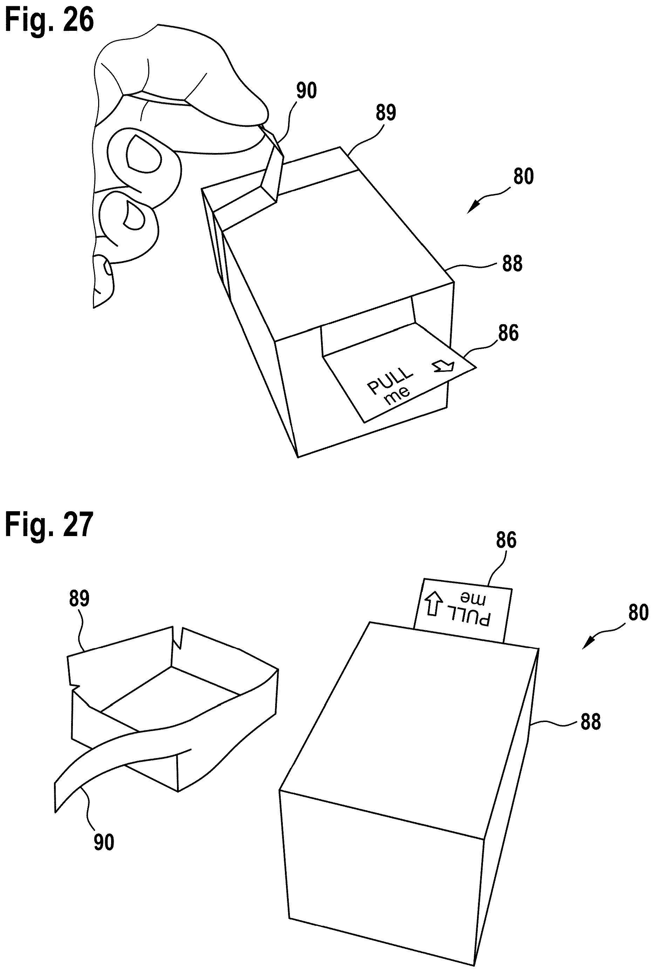

Fig. 26 zeigt, dass - unabhängig von der genauen Ausgestaltung des Behälters 80 - der Behälter 80 einen Grundkörper 88 zur Aufnahme des Zusatzstoffes 81 und einen Deckel 89 umfassen kann. Der Deckel 89 verschließt den Grundkörper 88.

Fig. 26 verdeutlicht, dass der Deckel beispielsweise mit einer Aufreißlasche 90 mit dem Grundkörper 88 verbunden sein kann.

Fig. 27 zeigt die aufgerissene Aufreißlasche 90 und den abgenommenen Deckel 89.

Figuren 26 und 27 verdeutlichen, dass für den Behälter 80 ein Mehrschichtmaterial, beispielsweise in Art eines Tetrapacks, verwendet werden kann.

### Bezugszeichenliste

1 Küchen- und/oder Gastronomiegerät
2 Gehäuse
3 Lebensmittelraum
4 Tür
5 Bedieneinheit
6 Heiz-/Umlufteinheit
7 Sammelbehälter
8 Waschflotten-Leitung
9 Feststoff-Einheit
   9.1 erste Feststoff-Einheit
   9.2 zweite Feststoff-Einheit
10 Aufnahme
   10.1 erste Aufnahme
   10.2 zweite Aufnahme
11 Zuleitung
   11.1 erste Zuleitung
   11.2 zweite Zuleitung
   11.3 gemeinsame Zuleitung
12 Ableitung
   12.1 erste Ableitung
   12.2 zweite Ableitung
   12.3 gemeinsame Ableitung
13 Zuleitungs-Pumpe
   13.1 erste Zuleitungs-Pumpe
   13.2 zweite Zuleitungs-Pumpe
   13.3 gemeinsame Zuleitungs-Pumpe
14 Klappe
   14.1 Klappensensor
15 Rückführung
16 Frischwasser-Zuleitung
17 Frischwasser-Ventil
18 Durchfluss-Sensor
19 Sensor
   19.1 erste Sensorposition
   19.2 zweite Sensorposition
   19.3 dritte Sensorposition
   19.4 vierte Sensorposition
   19.5 fünfte Sensorposition
   19.6 sechste Sensorposition
   19.7 siebte Sensorposition
20 Zirkulationsleitung
21 Zirkulationspumpe
22 Waschflotten-Pumpe
23 Steuergerät
30 Schutzanordnung
31 Strömungselement
32 Sieb
33 Freispülung
34 Versatz
35 Schmutzpartikel
36 erster Strömungsquerschnitt
37 zweiter Strömungsquerschnitt
50 Siphon
51 Gebläse
52 Auffanganordnung
53 Zwischenbehälter
54 Saugheber (=Überlauf)
   54.1 ansteigender Strömungskanal
   54.2 Übergang
   54.3 abfallender Strömungskanal
55 Boden
56 Spülleitung
57 Überlauf
58 Venturidüse
59 Bypass
60 erster Wasserstand
61 zweiter Wasserstand
62 oberer Überlauf
63 überschüssiger Zusatzstoff
64 Zufuhrstutzen
65 Hauptöffnung
66 Nebenöffnung
67 Leitungselement
68 Strömungswiderstandselemente
69 Leitungselement-Länge
70 Behälter-Sensor
71 Behälterdichtung
72 Aufnahme-Ablauf
73 Aufnahme-Winkel
80 Behälter
81 fester Zusatzstoff
82 Zusatzstoff-Länge
83 Zusatzstoff-Durchmesser
84 Außenkontur
85 asymmetrische Öffnung
86 Griffelement
87 Indikatorelement
88 Grundkörper
89 Deckel
90 Aufreißlasche

## Patentansprüche

1. Küchen- und/oder Gastronomiegerät (1), insbesondere Gargerät, umfassend
• einen Lebensmittelraum (3) zur Behandlung und/oder Aufbewahrung von Lebensmitteln, insbesondere ausgebildet als Garraum,
• einen Sammelbehälter (7) zur Bevorratung einer flüssigen Waschflotte,
• eine Waschflotten-Leitung (8) zum Leiten der Waschflotte aus dem Sammelbehälter (7) in den Lebensmittelraum (3),
• zumindest eine Feststoff-Einheit (9) mit:
▪ einer Aufnahme (10) zum Einsetzen eines Behälters (80) mit festem Zusatzstoff (81),
▪ einer zur Aufnahme (10) führenden Zuleitung (11) zum Zuführen eines, den Zusatzstoff ablösenden Fluids (81),
▪ und einer von der Aufnahme (10) in Richtung Sammelbehälter (7) führenden Ableitung (12) zum Abführen des Fluids samt abgelöstem Zusatzstoff (81),
• zumindest eine Zuleitungs-Pumpe (13) zum Pumpen des Fluids, vorzugsweise der Waschflotte, durch die zumindest eine Zuleitung,
• zumindest ein Gebläse (51) und/oder eine Belüftungsöffnung und/oder einen Kamin, dessen Luftstrom zum Trocknen des Zusatzstoffes (81) zur Aufnahme (10) führt.

2. Küchen- und/oder Gastronomiegerät nach Anspruch 1, umfassend zwei der Feststoff-Einheiten (9), nämlich:
• eine erste Feststoff-Einheit (9.1) mit einer ersten Aufnahme (10.1) zum Einsetzen eines Behälters (80) mit festem Zusatzstoff (81), insbesondere Reinigungsmittel, einer zur ersten Aufnahme (10.1) führenden ersten Zuleitung (11.1) zum Zuführen des den Zusatzstoff ablösenden Fluids und einer von der ersten Aufnahme (10.1) in Richtung Sammelbehälter (7) führenden ersten Ableitung (12.1) zum Abführen des Fluids samt abgelöstem Zusatzstoff (81),
• und eine zweite Feststoff-Einheit (9.2) mit einer zweiten Aufnahme (10.2) zum Einsetzen eines Behälters (80) mit festem Zusatzstoff (81), insbesondere Entkalker oder Klarspüler, einer zur zweiten Aufnahme (10.2) führenden zweiten Zuleitung (11.2) zum Zuführen des den Zusatzstoff (81) ablösenden Fluids und einer von der zweiten Aufnahme (10.2) in Richtung Sammelbehälter (7) führenden zweiten Ableitung (12.2) zum Abführen des Fluids samt abgelöstem Zusatzstoff (81).

3. Küchen- und/oder Gastronomiegerät nach Anspruch 2, umfassend
• eine erste Zuleitungs-Pumpe (13.1) zum Pumpen des Fluids durch die erste Zuleitung (11.1) und eine zweite Zuleitungs-Pumpe (13.2) zum Pumpen des Fluids durch die zweite Zuleitung (11.2),
• oder eine gemeinsame Zuleitungs-Pumpe (13.3) zum Pumpen des Fluids durch die erste Zuleitung (11.1) und die zweite Zuleitung (11.2); vorzugsweise: wobei die gemeinsame Zuleitungs-Pumpe (13.3) zum wahlweisen Fördern des Fluids in die erste Zuleitung (11.1) und in die zweite Zuleitung (11.2) ausgebildet ist, oder umfassend ein Ventil stromab der gemeinsamen Zuleitungs-Pumpe (13.3) zum wahlweisen Leiten des Fluids in die erste Zuleitung (11.1) und in die zweite Zuleitung (11.2).

4. Küchen- und/oder Gastronomiegerät nach einem der Ansprüche 2 oder 3,
• wobei die erste Ableitung (12.1) und die zweite Ableitung (12.2) in eine gemeinsame Ableitung (12.3) münden, wobei die gemeinsame Ableitung (12.3) in den Sammelbehälter (7) mündet;
• und/oder wobei vom Sammelbehälter (7) oder von der Waschflotten-Leitung (8) eine gemeinsame Zuleitung (11.3) abzweigt, die sich in die erste Zuleitung (11.1) und in die zweite Zuleitung (11.2) teilt.

5. Küchen- und/oder Gastronomiegerät nach einem der vorhergehenden Ansprüche, umfassend zumindest einen Sensor (19), vorzugsweise Leitwertsensor, zum Ermitteln einer Steuerungsgröße, die von der Konzentration an Zusatzstoff (81) abhängt; vorzugsweise:
• wobei der Sensor (19) in der Waschflotten-Leitung (8) angeordnet ist,
• und/oder wobei der Sensor (19) in der Zuleitung (11) angeordnet ist,
• und/oder wobei der Sensor (19) in der Ableitung (12) angeordnet ist,
• und/oder wobei der Sensor (19) in einer Zirkulationsleitung (20) angeordnet ist, die die Waschflotte, unter Umgehung des Lebensmittelraums (3) und der Zusatzstoffeinheit(en) (9), zirkuliert.

6. Küchen- und/oder Gastronomiegerät nach Anspruch 5, wobei das Küchen- und/oder Gastronomiegerät (1) dazu ausgebildet ist, die zumindest eine Zuleitungs-Pumpe (13) in Abhängigkeit der Steuerungsgröße anzusteuern, vorzugsweise ein- und auszuschalten und/oder in ihrer Drehzahl zu verändern und/oder in ihrer Fördermenge zu verändern.

7. Küchen- und/oder Gastronomiegerät nach einem der vorhergehenden Ansprüche, wobei das Küchen- und/oder Gastronomiegerät (1) dazu ausgebildet ist, eine Indikatorgröße im Fluid zu erfassen, die von einer Konzentration eines Indikatorstoffs abhängt, der an definierter Position im Zusatzstoff (81) positionierbar ist und durch das Fluid aus dem Zusatzstoff (81) ablösbar ist.

8. Küchen- und/oder Gastronomiegerät nach einem der vorhergehenden Ansprüche, umfassend einen Siphon (50) in der Ableitung (12) als Dampfsperre zwischen Sammelbehälter (7) und der zumindest einen Aufnahme (10).

9. Küchen- und/oder Gastronomiegerät nach einem der vorhergehenden Ansprüche wobei die zumindest eine Feststoff-Einheit (9) eine Auffanganordnung (52) in der Ableitung (12) zum Auffangen von überschüssigem Zusatzstoff (63) umfasst.

10. Küchen- und/oder Gastronomiegerät nach Anspruch 9, wobei die Auffanganordnung (52) einen Zwischenbehälter (53) umfasst, wobei die Ableitung (12) durch den Zwischenbehälter (53) in Richtung Sammelbehälter (7) führt.

11. Küchen- und/oder Gastronomiegerät nach Anspruch 10, wobei der Zwischenbehälter (53) einen zum Sammelbehälter (7) führenden Überlauf (57) aufweist; vorzugsweise wobei ein Boden des Zwischenbehälters (53) zum Überlauf (57) schräg ansteigt.

12. Küchen- und/oder Gastronomiegerät nach Anspruch 11, wobei der Überlauf (57) als ein Saugheber (54) ausgebildet, indem der Überlauf (57) einen ansteigenden Strömungskanal (54.1), einen abfallenden Strömungskanal (54.3) und einen die beiden Strömungskanäle verbindenden Übergang (54.2) umfasst, wobei der Zwischenbehälter (53) zur Selbstentleerung höher als der Übergang (54.2) befüllbar ist.

13. Küchen- und/oder Gastronomiegerät nach einem der Ansprüche 10 bis 12, umfassend eine Spülleitung (56), die unter Umgehung der Aufnahme (10) zum Zwischenbehälter (53) führt; vorzugsweise, wobei die Spülleitung (56) von der Zuleitung (11) stromab der Zuleitungs-Pumpe (13) abzweigt; vorzugsweise: wobei die Spülleitung (56) in den Zwischenbehälter (53) mündet, oder wobei die Spülleitung (56) mittels einer Venturidüse (58) aus dem Zwischenbehälter (53) saugt und stromab des Zwischenbehälters (53) in die Ableitung (12) oder in den Sammelbehälter (7) mündet.

14. Küchen- und/oder Gastronomiegerät nach einem der Ansprüche 9 bis 13, wobei die Auffanganordnung (52) ein Leitungselement (67) zum Auffangen von überschüssigem Zusatzstoff (63) umfasst; vorzugsweise mit
• einer Leitungselement-Länge (69) von zumindest 5 cm, vorzugsweise zumindest 10 cm,
• und/oder mit einem Gefälle von höchstens 30°, vorzugsweise höchstens 20°,
• und/oder zumindest einem Strömungswiderstandselement (68), vorzugsweise mehreren Strömungswiderstandselementen (68), am Boden des Leitungselements (67).

15. Küchen- und/oder Gastronomiegerät nach einem der Ansprüche 9 bis 14, wobei die Zuleitung (11) dazu ausgebildet, vorzugsweise in Abhängigkeit des Drucks in der Zuleitung (11), das Fluid wahlweise auf die Aufnahme (10) zum Ablösen des Zusatzstoffes und in Auffanganordnung (52) zu leiten.

16. Küchen- und/oder Gastronomiegerät nach einem der vorhergehenden Ansprüche, umfassend
• eine Rückführung (15) zum Führen der Waschflotte aus dem Lebensmittelraum (3) in den Sammelbehälter (7),
• und/oder eine Waschflotten-Pumpe (22) zum Pumpen der Waschflotte durch die Waschflotten-Leitung (8),
• und/oder eine Frischwasser-Zuleitung (16), vorzugsweise mit ansteuerbarem Frischwasser-Ventil (17) und/oder mit einem Durchfluss-Sensor (18), zum Zuführen von Frischwasser in den Sammelbehälter (7),
• und/oder eine Klappe (14) an der Aufnahme (10), die zum Einführen des Behälters (80) betätigbar ist,
• und/oder einen Klappensensor (14.1), insbesondere Helligkeitssensor, zum Erfassen eines geöffneten und/oder eines geschlossenen Zustands der Klappe (14),
• und/oder einen Behälter-Sensor (70) zum Erfassen eines eingeführten Behälters (80).

## Claims

1. Kitchen and/or gastronomy device (1), in particular cooking device, comprising
• a food compartment (3) for treating and/or storing food, in particular designed as a cooking chamber,
• a collecting tank (7) for storing a liquid wash liquor,
• a washing liquor line (8) for conducting the wash liquor from the collecting tank (7) into the food compartment (3),
• at least one solids unit (9) having:
▪ a receptacle (10) for inserting a container (80) with solid additive (81),
▪ a feed line (11) leading to the receptacle (10) for feeding a fluid (81) which detaches the additive,
▪ and a discharge line (12) leading from the receptacle (10) in the direction of the collecting tank (7) for discharging the fluid together with detached additive (81),
• at least one feed pump (13) for pumping the fluid, preferably the wash liquor, through the at least one feed line,
• at least one fan (51) and/or a ventilation opening and/or a chimney, the air flow of which leads to the receptacle (10) for drying the additive (81).

2. Kitchen and/or gastronomy device according to claim 1, comprising two of the solids units (9), namely:
• a first solids unit (9.1) with a first receptacle (10.1) for inserting a container (80) with solid additive (81), in particular cleaning agent, a first feed line (11.1) leading to the first receptacle (10.1) for feeding the fluid which detaches the additive and a first discharge line (12.1) leading from the first receptacle (10.1) in the direction of the collecting tank (7) for discharging the fluid together with detached additive (81),
• and a second solids unit (9.2) with a second receptacle (10.2) for inserting a container (80) with solid additive (81), in particular descaler or rinse aid, a second feed line (11.2) leading to the second receptacle (10.2) for feeding the fluid which detaches the additive (81) and a second discharge line (12.2) leading from the second receptacle (10.2) in the direction of the collecting tank (7) for discharging the fluid together with detached additive (81).

3. Kitchen and/or gastronomy device according to claim 2, comprising
• a first feed pump (13.1) for pumping the fluid through the first feed line (11.1) and a second feed pump (13.2) for pumping the fluid through the second feed line (11.2),
• or a common feed pump (13.3) for pumping the fluid through the first feed line (11.1) and the second feed line (11.2); preferably: wherein the common feed pump (13.3) is designed for optionally conveying the fluid into the first feed line (11.1) and into the second feed line (11.2), or comprising a valve downstream of the common feed pump (13.3) for optionally conducting the fluid into the first feed line (11.1) and into the second feed line (11.2).

4. Kitchen and/or gastronomy device according to one of claims 2 or 3,
• wherein the first discharge line (12.1) and the second discharge line (12.2) open into a common discharge line (12.3), wherein the common discharge line (12.3) opens into the collecting tank (7);
• and/or wherein a common feed line (11.3) branches off from the collecting tank (7) or from the washing liquor line (8) and divides into the first feed line (11.1) and into the second feed line (11.2).

5. Kitchen and/or gastronomy device according to one of the preceding claims, comprising at least one sensor (19), preferably conductance sensor, for determining a control variable which depends on the concentration of additive (81); preferably:
• wherein the sensor (19) is arranged in the washing liquor line (8),
• and/or wherein the sensor (19) is arranged in the feed line (11),
• and/or wherein the sensor (19) is arranged in the discharge line (12),
• and/or wherein the sensor (19) is arranged in a circulation line (20) which circulates the wash liquor, bypassing the food compartment (3) and the additive unit(s) (9).

6. Kitchen and/or gastronomy device according to claim 5, wherein the kitchen and/or gastronomy device (1) is designed to control the at least one feed pump (13) as a function of the control variable, preferably to switch it on and off and/or to change its rotational speed and/or to change its delivery rate.

7. Kitchen and/or gastronomy device according to one of the preceding claims, wherein the kitchen and/or gastronomy device (1) is designed to detect an indicator variable in the fluid which depends on a concentration of an indicator substance which can be positioned at a defined position in the additive (81) and can be removed from the additive (81) by the fluid.

8. Kitchen and/or gastronomy device according to one of the preceding claims, comprising a siphon (50) in the discharge line (12) as a vapour barrier between the collecting tank (7) and the at least one receptacle (10).

9. Kitchen and/or gastronomy device according to one of the preceding claims, wherein the at least one solids unit (9) comprises a collecting arrangement (52) in the discharge line (12) for collecting excess additive (63).

10. Kitchen and/or gastronomy device according to claim 9, wherein the collecting arrangement (52) comprises an intermediate container (53), wherein the discharge line (12) leads through the intermediate container (53) in the direction of the collecting tank (7).

11. Kitchen and/or gastronomy device according to claim 10, wherein the intermediate container (53) has an overflow (57) leading to the collecting tank (7); preferably wherein a bottom of the intermediate container (53) rises obliquely to the overflow (57).

12. Kitchen and/or gastronomy device according to claim 11, wherein the overflow (57) is designed as a suction lifter (54), in that the overflow (57) comprises an ascending flow channel (54.1), a descending flow channel (54.3) and a transition (54.2) connecting the two flow channels, wherein the intermediate container (53) can be filled higher than the transition (54.2) for self-emptying.

13. Kitchen and/or gastronomy device according to one of claims 10 to 12, comprising a flushing line (56) which leads to the intermediate container (53) while bypassing the receptacle (10); preferably, wherein the flushing line (56) branches off from the feed line (11) downstream of the feed pump (13); preferably: wherein the flushing line (56) opens into the intermediate container (53), or wherein the flushing line (56) sucks out of the intermediate container (53) by means of a Venturi nozzle (58) and opens into the discharge line (12) or into the collecting tank (7) downstream of the intermediate container (53).

14. Kitchen and/or gastronomy device according to one of claims 9 to 13, wherein the collecting arrangement (52) comprises a line element (67) for collecting excess additive (63); preferably with
• a line element length (69) of at least 5 cm, preferably at least 10 cm,
• and/or with a gradient of at most 30°, preferably at most 20°,
• and/or at least one flow resistance element (68), preferably a plurality of flow resistance elements (68), at the bottom of the line element (67).

15. Kitchen and/or gastronomy device according to one of claims 9 to 14, wherein the feed line (11) is designed, preferably as a function of the pressure in the feed line (11), to conduct the fluid optionally onto the receptacle (10) for removing the additive and into the collecting arrangement (52).

16. Kitchen and/or gastronomy device according to one of the preceding claims, comprising
• a return line (15) for conducting the wash liquor from the food compartment (3) into the collecting tank (7),
• and/or a wash liquor pump (22) for pumping the wash liquor through the wash liquor line (8),
• and/or a fresh water feed line (16), preferably with a controllable fresh water valve (17) and/or with a flow sensor (18), for feeding fresh water into the collecting tank (7),
• and/or a flap (14) on the receptacle (10), which flap can be actuated for inserting the container (80),
• and/or a flap sensor (14.1), in particular a brightness sensor, for detecting an open and/or a closed state of the flap (14),
• and/or a container sensor (70) for detecting an inserted container (80).

## Revendications

1. Appareil de cuisine et/ou de gastronomie (1), en particulier appareil de cuisson, comprenant
• un espace alimentaire (3) pour le traitement et/ou la conservation de denrées alimentaires, notamment conçu comme un espace de cuisson,
• un récipient de collecte (7) pour le stockage d'un bain de lavage liquide,
• une conduite de bain de lavage (8) pour acheminer le bain de lavage du réservoir collecteur (7) dans l'espace alimentaire (3),
• au moins une unité de matière solide (9) comportant :
▪ un logement (10) pour insérer un récipient (80) d'additif solide (81),
▪ une conduite d'alimentation (11) menant au logement (10) pour fournir un fluide (81) dissolvant l'additif,
▪ et une dérivation (12) menant du logement (10) en direction du récipient collecteur (7) pour évacuer le fluide ainsi que l'additif (81) dissous,
• au moins une pompe d'alimentation (13) pour pomper le fluide, de préférence le bain de lavage, à travers la au moins une conduite d'alimentation,
• au moins un ventilateur (51) et/ou une ouverture d'aération et/ou une cheminée dont le flux d'air pour le séchage de l'additif (81) mène au logement (10).

2. Appareil de cuisine et/ou de gastronomie selon la revendication 1, comprenant deux des unités de matière solide (9), à savoir :
• une première unité de matière solide (9.1) comportant un premier logement (10.1) pour insérer un récipient (80) contenant un additif solide (81), en particulier un détergent, une première conduite d'alimentation (11.1) menant au premier logement (10.1) pour fournir le fluide dissolvant l'additif et une première dérivation (12.1) menant du premier logement (10.1) en direction du récipient collecteur (7) pour évacuer le fluide contenant l'additif dissous (81),
• et une seconde unité de matière solide (9.2) avec un second logement (10.2) pour insérer un récipient (80) contenant un additif solide (81), en particulier un détartrant ou un produit de rinçage, une seconde conduite d'alimentation (11.2) menant au second logement (10.2) pour fournir le fluide dissolvant l'additif (81) et une seconde conduite d'évacuation (12.2) menant du second logement (10.2) en direction du récipient collecteur (7) pour évacuer le fluide avec l'additif dissous (81).

3. Appareil de cuisine et/ou de gastronomie selon la revendication 2, comprenant
• une première pompe d'alimentation (13.1) pour pomper le fluide à travers la première conduite d'alimentation (11.1) et une seconde pompe d'alimentation (13.2) pour pomper le fluide à travers la seconde conduite d'alimentation (11.2),
• ou une pompe d'alimentation commune (13.3) pour pomper le fluide à travers la première conduite d'alimentation (11.1) et la seconde conduite d'alimentation (11.2) ; de préférence : dans lequel la pompe d'alimentation commune (13.3) est conçue pour acheminer de manière facultative le fluide dans la première conduite d'alimentation (11.1) et dans la seconde conduite d'alimentation (11.2), ou comprenant une vanne en aval de la pompe d'alimentation commune (13.3) pour acheminer de manière facultative le fluide dans la première conduite d'alimentation (11.1) et dans la seconde conduite d'alimentation (11.2).

4. Appareil de cuisine et/ou de gastronomie selon l'une quelconque des revendications 2 ou 3,
• dans lequel la première dérivation (12.1) et la seconde dérivation (12.2) débouchent dans une dérivation commune (12.3), dans lequel la dérivation commune (12.3) débouche dans le réservoir collecteur (7) ;
• et/ou dans lequel une conduite d'alimentation commune (11.3) dérive du réservoir collecteur (7) ou de la conduite de bain de lavage (8), qui se divise en la première conduite d'alimentation (11.1) et en la seconde conduite d'alimentation (11.2).

5. Appareil de cuisine et/ou de gastronomie selon l'une quelconque des revendications précédentes, comprenant au moins un capteur (19), de préférence un capteur de conductance, pour déterminer une grandeur de commande dépendante de la concentration en additif (81) ; de préférence :
• dans lequel le capteur (19) est disposé dans la conduite de bain de lavage (8),
• et/ou dans lequel le capteur (19) est disposé dans la conduite d'alimentation (11),
• et/ou dans lequel le capteur (19) est disposé dans la dérivation (12),
• et/ou dans lequel le capteur (19) est disposé dans une conduite de circulation (20) qui fait circuler le bain de lavage, en contournant l'espace alimentaire (3) et la ou les unités d'additif (9).

6. Appareil de cuisine et/ou de gastronomie selon la revendication 5, dans lequel l'appareil de cuisine et/ou de gastronomie (1) est conçu pour commander, de préférence allumer et éteindre et/ou modifier sa vitesse de rotation et/ou modifier son débit d'alimentation de l'au moins une pompe d'alimentation (13) en fonction de la grandeur de commande.

7. Appareil de cuisine et/ou de gastronomie selon l'une quelconque des revendications précédentes, dans lequel l'appareil de cuisine et/ou de gastronomie (1) est conçu pour détecter une grandeur d'indicateur dans le fluide qui dépend d'une concentration d'une substance indicatrice qui est positionnable dans une position définie dans l'additif (81) et dissociable par le fluide de l'additif (81).

8. Appareil de cuisine et/ou de gastronomie selon l'une quelconque des revendications précédentes, comprenant un siphon (50) dans la dérivation (12) servant de pare-vapeur entre le récipient de collecte (7) et l'au moins un logement (10).

9. Appareil de cuisine et/ou de gastronomie selon l'une quelconque des revendications précédentes, dans lequel l'au moins une unité de matière solide (9) comprend un agencement de rétention (52) dans la dérivation (12) pour recueillir l'additif (63) excédentaire.

10. Appareil de cuisine et/ou de gastronomie selon la revendication 9, dans lequel l'agencement de rétention (52) comprend un récipient intermédiaire (53), dans lequel la dérivation (12) passe à travers le récipient intermédiaire (53) en direction du récipient de collecte (7).

11. Appareil de cuisine et/ou de gastronomie selon la revendication 10, dans lequel le récipient intermédiaire (53) présente un trop-plein (57) menant au récipient de collecte (7) ; de préférence dans lequel un fond du récipient intermédiaire (53) monte en biais vers le trop-plein (57).

12. Appareil de cuisine et/ou de gastronomie selon la revendication 11, dans lequel le trop-plein (57) est conçu comme une ventouse (54) en ce que le trop-plein (57) comprend un canal d'écoulement ascendant (54.1), un canal d'écoulement descendant (54.3) et une transition (54.2) reliant les deux canaux d'écoulement, dans lequel le récipient intermédiaire (53) peut être rempli plus haut que la transition (54.2) pour s'auto-vider.

13. Appareil de cuisine et/ou de gastronomie selon l'une quelconque des revendications 10 à 12, comprenant une conduite de rinçage (56) qui mène, en contournant le logement (10), au récipient intermédiaire (53) ; de préférence, dans lequel la conduite de rinçage (56) dérive de la conduite d'alimentation (11) en aval de la pompe d'alimentation (13) ; de préférence : dans lequel la conduite de rinçage (56) débouche dans le récipient intermédiaire (53), ou dans lequel la conduite de rinçage (56) aspire à partir du récipient intermédiaire (53) au moyen d'une buse Venturi (58) et débouche en aval du récipient intermédiaire (53) dans la dérivation (12) ou dans le récipient de collecte (7).

14. Appareil de cuisine et/ou de gastronomie selon l'une quelconque des revendications 9 à 13, dans lequel l'agencement de rétention (52) comprend un élément de conduite (67) pour recueillir l'additif (63) excédentaire ; de préférence avec
• une longueur d'élément de conduite (69) d'au moins 5 cm, de préférence d'au moins 10 cm,
• et/ou avec une pente de 30° maximum, de préférence de 20° maximum,
• et/ou au moins un élément de résistance à l'écoulement (68), de préférence plusieurs éléments de résistance à l'écoulement (68), au fond de l'élément de conduite (67).

15. Appareil de cuisine et/ou de gastronomie selon l'une quelconque des revendications 9 à 14, dans lequel la conduite d'alimentation (11) est conçue pour acheminer, de préférence en fonction de la pression dans la conduite d'alimentation (11), le fluide au choix vers le logement (10) pour dissoudre l'additif et dans un agencement de rétention (52).

16. Appareil de cuisine et/ou de gastronomie selon l'une quelconque des revendications précédentes, comprenant
• un retour (15) pour acheminer le bain de lavage de l'espace alimentaire (3) dans le récipient de collecte (7),
• et/ou une pompe de bain de lavage (22) pour pomper le bain de lavage à travers la conduite de bain de lavage (8),
• et/ou une conduite d'alimentation en eau douce (16), de préférence avec une vanne d'eau douce pilotable (17) et/ou avec un capteur de débit (18), pour amener de l'eau douce dans le récipient de collecte (7),
• et/ou un clapet (14) au niveau du logement (10) qui est actionnable pour introduire le récipient (80),
• et/ou un capteur de clapet (14.1), en particulier un capteur de luminosité, pour détecter un état ouvert et/ou un état fermé du clapet (14),
• et/ou un capteur de récipient (70) pour détecter un récipient (80) inséré.
